# EUROPÄISCHE PATENTSCHRIFT

(11) **EP 2 539 349 B1**
(45) Veröffentlichungstag und Bekanntmachung des Hinweises auf die Patenterteilung: **14.05.2014**
(21) Anmeldenummer: 10800761.8
(22) Anmeldetag: 28.12.2010
(51) Int. Cl.: C08G 77/14

(54) **CARBOXYFUNKTIONALISIERTE SILICIUM ENTHALTENDE VORLÄUFERVERBINDUNG VERSCHIEDENER ORGANISCHER CARBONSÄUREN**
CARBOXYL-FUNCTIONALIZED SILICON-CONTAINING PRECURSOR COMPOUND OF VARIOUS ORGANIC CARBOXYLIC ACIDS
COMPOSÉ PRÉCURSEUR CONTENANT DU SILICIUM, À FONCTIONNALITÉ CARBOXY, DE DIFFÉRENTS ACIDES CARBOXYLIQUES ORGANIQUES

(30) Priorität: 25.02.2010 DE 102010002358
(43) Veröffentlichungstag der Anmeldung: 02.01.2013
(73) Patentinhaber: Evonik Degussa GmbH, 45128 Essen (DE)
(72) Erfinder: WEISSENBACH, Kerstin, Bridgewater, NJ 08807 (US); IOANNIDIS, Aristidis, 79618 Rheinfelden (DE); BIELAWSKI, Bastian, 79618 Rheinfelden (DE); SPRINGER, Christian, 79618 Rheinfelden (DE); MONKIEWICZ, Jaroslaw, 79618 Rheinfelden (DE)
(86) Internationale Anmeldenummer: PCT/EP2010/070770
(87) Internationale Veröffentlichungsnummer: WO 2011/103940

(56) Entgegenhaltungen:
- EP-A2- 1 318 526
- DE-A1- 19 848 351
- US-A- 4 870 111

## Beschreibung

Die Erfindung betrifft eine Zusammensetzung einer carboxyfunktionalisierten, Silicium enthaltenden Vorläuferverbindung mindestens zwei verschiedener organischer Säuren, die zwei, drei oder vier mit verschiedenen Kohlenwasserstoffresten funktionalisierte Carboxy-Gruppen gemäß Formel I und/oder II aufweist, die als Carbonsäuren freigesetzt und Silanhydrolysekatalysator und/oder Silankondensationskatalysator verwendet werden können. Ferner betrifft die Erfindung Verfahren zu deren Herstellung, ihre Verwendung zur Vernetzung von Polymeren, als auch eine Formulierung dieser in Form eines Masterbatches.

Zur Herstellung von gefüllten und ungefüllten Polymercompounds, insbesondere von Polyethylen (PE) und dessen CoPolymeren ist es bekannt zur Vernetzung von silan-gepfropften oder silan-co-polymerisierten Polyethylenen als Silanolkondensationskatalysatoren Organozinn-Verbindungen oder aromatische Sulphonsäuren (Borealis Ambicat®) einzusetzen. Nachteilig bei den Organozinn-Verbindungen ist deren signifikante Toxizität, während die Sulphonsäuren sich durch ihren stechenden Geruch bemerkbar machen, der sich durch alle Prozessstufen bis in das Endprodukt fortsetzt. Durch reaktionsbedingte Nebenprodukte sind die mit Sulphonsäuren vernetzten Polymercompounds in der Regel nicht geeignet im Lebensmittelbereich oder im Bereich der Trinkwasserversorgung eingesetzt zu werden, beispielsweise zur Herstellung von Trinkwasserrohren. Übliche Zinn Silanolkondensationskatalysatoren sind Dibutylzinndilaurat (dibutyltindilaurate, DBTDL) und Dioctylzinndilaurat (dioctyltindilaurate, DOTL), die über ihre Koordinationssphäre als Katalysator wirken.

Es ist bekannt zur Herstellung von feuchtigkeitsvernetzbaren Polymeren Silane in Gegenwart von Radikalbildnern auf Polymerketten aufzupfropfen und nach der Formgebung die Feuchtigkeitsvernetzung in Gegenwart der genannten Silanhydrolysekatalysatoren und/oder Silanolkondensationskatalysatoren durchzuführen. Die Feuchtigkeitsvernetzung von Polymeren mit hydrolysierbaren ungesättigten Silanen wird weltweit zur Herstellung von Kabeln, Rohren, Schäumen usw. eingesetzt. Verfahren dieser Art sind unter den Namen Sioplas-Prozess (DE 19 63 571 C3, DE 21 51 270 C3, US 3,646,155) und Monosil-Prozess (DE 25 54 525 C3, US 4,117,195) bekannt. Während beim Monosil-Verfahren der Vernetzungskatalysator bereits beim ersten Verarbeitungsschritt zugesetzt wird, erfolgt beim Sioplas-Verfahren der Zusatz des Vernetzungskatalysators erst im nachfolgenden, dem formgebenden Schritt. Zudem können vinylfunktionelle Silane zusammen mit den Monomeren und/oder Prepolymeren direkt zu dem Basispolymer co-polymerisiert werden oder auf Polymere über Pfropfung auf die Polymerketten angekoppelt werden.

Die EP 207 627 offenbart weitere Zinn enthaltende Katalysatorsysteme und damit modifizierte Co-Polymere basierend auf der Reaktion von Dibutylzinnoxid mit Ethylen-Acrylsäure-CoPolymeren. Die JP 58013613 verwendet Sn(Acetyl)₂ als Katalysator und die JP 05162237 lehrt die Verwendung von Zinn- , Zink- oder Kobaltcarboxylaten zusammen mit gebundenen Kohlenwasserstoff-Gruppen als Silanolkondensationskatalysatoren, wie Dioctylzinnmaleat, Monobutylzinnoxid, Dimethyloxybutylzinn oder Dibutylzinndiacetat. Die JP 3656545 setzt zur Vernetzung Zink und Aluminiumseifen, wie Zinkoctylat, Aluminiumlaurat ein. Die JP 1042509 offenbart zur Vernetzung von Silanen ebenfalls die Verwendung von organischen Zinn-Verbindungen, aber auch auf Titan-ChelatVerbindungen basierende Alkyltitansäureester.

Die Fettsäurereaktionsprodukte von funktionellen Trichlorsilanen sind generell seit den 1960er Jahren bekannt, insbesondere als Schmiermittelzusätze. Die DE 25 44 125 offenbart die Verwendung von Dimethyldicarboxylsilanen als Schmiermittelzusatz in der Beschichtung von Magnetbändern. In Abwesenheit von starken Säuren und Basen ist die Verbindung ausreichend stabil gegenüber einer Hydrolyse.

Aufgabe der vorliegenden Erfindung ist es neue carboxyfunktionalisierte Silicium enthaltende Vorläuferverbindungen organischer Säuren bereitzustellen, die als Silanhydrolyse- und/oder Silanolkondensationskatalysatoren eingesetzt werden können, die die genannten Nachteile der bekannten Katalysatoren aus dem Stand der Technik nicht aufweisen und sich vorzugsweise mit silangepfropften, silan-co-polymerisierten Polymeren und/oder Monomeren oder Prepolymeren dispergieren oder homogenisieren lassen und gegebenenfalls polymerisieren lassen. Eine besondere Aufgabe bestand darin, die Eigenschaften der Vorläuferverbindungen gezielt zu modifizieren, insbesondere bezüglich ihrer Löslichkeit in organischen Medien oder ihre Reaktivität gegenüber Feuchtigkeit oder die Reaktivität gegenüber polymerisierbaren Verbindungen oder auch das Reaktivitätsspektrum des gebildeten Katalysators als auch den Aggregatzustand der Vorläuferverbindung um damit ihre Handhabung zu vereinfachen. Eine weitere Aufgabe bestand darin die Reaktivität von ungesättigten Kohlenwasserstoff enthaltenden Carboxysilanen als funktionelles Comonomer oder Silanisierungs-Agenz gegenüber einer Polymerisierungsreaktion bspw. gegenüber thermoplastischen Basispolymeren oder auch Monomeren, wie Ethylen, einzustellen.

Gelöst wird die Aufgabe durch die erfindungsgemäße Zusammensetzung entsprechend den Merkmalen des Anspruchs 1, die Formulierung des Masterbatches nach Anspruch 18 und die erfindungsgemäßen Verfahren mit den Merkmalen des Anspruchs 13 sowie durch die Verwendung nach Anspruch 17. Bevorzugte Ausführungsformen sind den Unteransprüchen und vorzugsweise der Beschreibung zu entnehmen.

Überraschenderweise wurde gefunden, dass die Zusammensetzung die eine hydrolysierbare Vorläuferverbindung mindestens zwei verschiedener organischer Säuren der allgemeinen Formeln I und/oder II umfasst, sich bezüglich ihres Eigenschaftsspektrums durch die richtige Wahl der mit verschiedenen bzw. unterschiedlichen Kohlenwasserstoffresten funktionalisierten Carboxy-Gruppen, bevorzugt mit R³ ist unabhängig R^{3a}, R^{3b} und R^{3c} und gegebenenfalls R^{3d}, auf ein gegebenes Anforderungsprofil der späteren Anwendung gezielt einstellen lassen.

So kann durch die richtige Wahl von beispielsweise unterschiedlich langen Fettsäuren der allgemeinen Formel IV umfassend die Fettsäuren der Formeln IVa, IVb, IVc und gegebenenfalls IVd, bei der Herstellung der Vorläuferverbindung sichergestellt werden, dass sie in Vinyltrimethoxysilan oder Vinyltriethoxysilan gut löslich ist. Gleichfalls kann über die gezielte richtige Wahl der verschiedenen Carbonsäuren der Formel IV bei der Herstellung der Vorläuferverbindung der Formel I und/oder II die spätere Freisetzung der reaktiven Katalysatoren, d. h. der Säuren der Formel IV als auch deren Reaktivität in den Polymerisationsverfahren gesteuert werden.

Gegenstand der Erfindung ist eine Zusammensetzung umfassend mindestens eine carboxyfunktionalisierte Silicium enthaltende Vorläuferverbindung organischer Säuren, die mindestens eine carboxyfunktionalisierte Silicium enthaltende Vorläuferverbindung zwei verschiedener organischer Säuren umfasst, bevorzugt von drei oder vier verschiedenen organischen Säuren, insbesondere geeignet als Silanhydrolysekatalysator und/oder Silankondensationskatalysator oder als Katalysatorvorläuferverbindung, und die carboxyfunktionalisierte Silicium enthaltende Vorläuferverbindung mindestens zwei, bevorzugt drei bis vier, mit verschiedenen Kohlenwasserstoffresten funktionalisierte Carboxy-Gruppen aufweist und der allgemeinen Formel I und/oder einem oligomeren Siloxan, insbesondere einem Dimer, Trimer, niedrigmolekularen oligomeren Siloxan, abgeleitet aus der Verbindung der allgemeinen Formel I gemäß der idealisierten allgemeinen Formel II entspricht

(A)_{z}SiR²ₓ(OR¹)_{4-(z+x)} (I)

(R¹O) [(R¹O)_{2-(x+z)}(R²)ₓSi(A)_{z}O]ₐ[Si(A)_{z}(R²)ₓ(OR¹)_{2-(x+z)}O]_{b}R¹ (II)

- wobei in Formeln I und II unabhängig voneinander z gleich 0, 1 oder 2, x gleich 0, 1 oder 2 sind mit der Maßgabe, dass (z+x) kleiner gleich (≤) 2 ist
- A unabhängig voneinander in Formeln I und II einer unsubstituierten oder substituierten Kohlenwasserstoff-Gruppe entspricht, insbesondere einer unsubstituierten oder substituierten linearen, verzweigten und/oder cyclischen Alkyl-, Cycloalkenyl-alkylen-, Alkenyl-, Alkylaryl-, Arylalkylen-, Aryl-, bevorzugt Phenyl-; Methacryloxyalkyl-, Acryloxyalkyl- oder Halogenkohlenwasserstoff-Gruppe;
- R¹ entspricht unabhängig in Formel I und in Formel II jeweils unabhängig voneinander mindestens zwei verschiedenen Carbonyl-R³ Gruppen, wobei R³ ausgewählt ist aus einem substituierten oder unsubstituierten Kohlenwasserstoffrest mit 3 bis 45 C-Atomen, vorzugsweise einem unsubstituierten Kohlenwasserstoffrest oder mit Hydroxy- und/oder Carboxy-Gruppen substituierten Kohlenwasserstoffrest, bevorzugt umfasst R¹ unabhängig gleich R^{1a}=-(CO)R^{3a}, R^{1b}= -(CO)R^{3b} sowie R^{1c}= -(CO)R^{3c} und gegebenenfalls R^{1d} = -(CO)R^{3d},
- R² ist unabhängig in Formel I und II jeweils unabhängig voneinander eine unsubstituierte lineare, verzweigte oder cyclische Alkyl-Gruppe mit 1 bis 24 C-Atomen, insbesondere mit 1 bis 16 C-Atomen, bevorzugt mit 1 bis 8 C-Atomen, besonders bevorzugt mit 1 bis 4 C-Atomen, oder eine Aryl-Gruppe, und
- in Formel II a größer gleich (≥) 1 und b größer gleich (≥) 1 sind, insbesondere sind in Formel I und/oder II x gleich 0 oder 1, z gleich 0 oder 1 und (x+z) kleiner gleich (≤) 2, bevorzugt ist x+y kleiner gleich (≤) 1, besonders bevorzugt ist z = 0 oder 1 und x = 0, wie vorzugsweise in olefinischen Carboxysilanen und/oder Tetracarboxysilanen der Formel I; oder sie Mischungen dieser Verbindungen umfasst.

Erfindungsgemäß kann die Silicium enthaltende Vorläuferverbindung der Formel I ein Carboxysilan, insbesondere ein olefinisches Carboxysilan, insbesondere ein tris-α-Carboxysilan, und/oder ein Tetracarboxysilan, insbesondere ein tetra-α-Carboxysilan, mit verschiedenen Carboxy-Gruppen sein. Das Carboxysilan - die Silicium enthaltenden Vorläuferverbindungen verschiedener organischer Säuren, insbesondere verschiedener Fettsäuren - kann in flüssiger Phase vorliegen und ist somit leicht dosierbar. Alternativ kann sie bevorzugt in fester Phase vorliegen und wird dadurch inert gegenüber einer Hydrolyse durch Luftfeuchtigkeit. Das olefinische Carboxysilan der Formel I ist erfindungsgemäß ein sogenanntes All-in-one-Paket, denn es kann co-polymerisiert oder gepfropft werden und kann gleichzeitig als Haftvermittler und/oder Silanhydrolysekatalysator und/oder Silanolkondensationskatalysator wirken. Bevorzugt tritt die Hydrolyse zur organischen Säure erst unter Zufuhr von Wärme und Feuchtigkeit ein.

Hergestellt wird die carboxyfunktionalisierte Silicium enthaltende Vorläuferverbindung durch Umsetzung gemäß der Reaktionsgleichungen (a) oder (b) von beispielsweise aber nicht ausschließlich drei oder vier organischen Säuren der allgemeinen Formel IV umfassend die Untergruppierung IVa, IVb, IVc und IVd. Mit Formel IV gleich R¹OH und der Untergruppierung Iva = R^{1a}OH, IVb = R^{1b}OH, IVc = R^{1c}OH, IVd = R^{1d}OH.

R^{1a}OH + R^{1b}OH + R^{1c}OH + R^{1d}OH + SiCl₄ → Si(OR^{1a}) (OR^{1b}) (OR^{1c}) (OR^{1d}) + 4 HCl (a)

R^{1a}OH + R^{1b}OH + R^{1c}OH + A-SiCl₃ → A-Si(OR^{1a}) (OR^{1b}) (OR^{1c}) + 3 HCl (b)

R¹ entspricht in Formel I und/oder II unabhängig voneinander verschiedenen Carbonyl-R³ Gruppen, d.h. verschiedenen -(CO)R³ - Gruppen (-(C=O)-R³), so dass -jedes OR¹ bevorzugt verschiedenen -O(CO)R³ entspricht, wie beispielsweise -O(CO)R³ umfasst -O(CO)R^{3a}, -O(CO)R^{3b}, -O(CO)R^{3c}, -O(CO)R^{3d}, wobei jedes R³ einem unsubstituierten oder substituierten Kohlenwasserstoffrest (KW-Rest) entspricht, insbesondere mit 1 bis 45 C-Atomen, bevorzugt mit 3 bis 45 C-Atomen, insbesondere mit 7 bis 45 C-Atomen, besser 7 bis 26 C-Atome oder 7 bis 22, vorzugsweise mit 8 bis 45 C-Atomen, bevorzugt mit 8 bis 22 C-Atomen, besonders bevorzugt mit 8 bis 18 C-Atomen, vorzugsweise mit 8 bis 16 C-Atomen oder auch 8 bis 13 oder 14 C-Atomen, insbesondere einem linearen, verzweigten und/oder cyclischen unsubstituierten und/oder substituierten Kohlenwasserstoffrest, besonders bevorzugt einem Kohlenwasserstoffrest einer natürlichen oder synthetischen Fettsäure, insbesondere ist jedes R³ in R¹ unabhängig voneinander ein gesättigter KW-Rest mit -CₙH₂ₙ₊₁ mit n = 4 bis 45, wie -C₄H₉, -C₅H₁₁, -C₆H₁₃, -C₇H₁₅, -C₈H₁₇, -C₉H₁₉, -C₁₀H₂₁, -C₁₁H₂₃, -C₁₂H₂₅, -C₁₃H₂₇, -C₁₄H₂₉, -C₁₅H₃₁, -C₁₆H₃₃, -C₁₇H₃₅, -C₁₉H₃₇, - C₁₉H₃₉, -C₂₀H₄₁, -C₂₁H₄₃, -C₂₂H₄₅, -C₂₃H₄₇, -C₂₄H₄₉, -C₂₅H₅₁, -C₂₆H₅₃, -C₂₇H₅₅, -C₂₈H₅₇, -C₂₉H₅₉, oder bevorzugt auch ein ungesättigter KW-Rest, wie beispielsweise -C₁₀H₁₉, -C₁₅H₂₉, -C₁₇H₃₃, -C₁₇H₃₃, -C₁₉H₃₇, -C₂₁H₄₁, -C₂₁H₄₁, -C₂₁H₄₁, -C₂₃H₄₅, -C₁₇H₃₁, -C₁₇H₂₉, -C₁₇H₂₉, -C₁₉H₃₁, -C₁₉H₂₉, -C₂₁H₃₃ und/oder -C₂₁H₃₁. Die kürzerkettigen KW-Reste R³, wie -C₄H₉, -C₃H₇, -C₂H₅, -CH₃ (Acetyl) und/oder R³ = H (Formyl) können ebenfalls in der Zusammensetzung verwendet werden. Daher umfasst die allgemeine Formel IV mit R¹OH die verschiedenen Säuren der Untergruppierung IVa R^{1a}OH = HO(CO)R^{3a}, IVb R^{1b}OH = = HO(CO)R^{3b}, IVc R^{1c}OH = = HO(CO)R^{3c}, IVd R^{1d}OH = = HO (CO)R^{3d}.

Aufgrund der geringen Hydrophobie der KW-Reste basiert die Zusammensetzung in der Regel jedoch auf Verbindungen der Formel I und/oder II in denen verschiedene R¹ jeweils eine Carbonyl-R³ Gruppe, ausgewählt aus der Gruppe R³ aufweisen, mit einem unsubstituierten oder substituierten Kohlenwasserstoffrest mit 3 bis 45 C-Atomen, mit 7 bis 45 C-Atomen, insbesondere mit 7 bis 26 C-Atomen, bevorzugt mit 7 bis 22 C-Atomen, besonders bevorzugt mit 7 bis 14 C-Atomen oder vorzugsweise mit 7 bis 13 C-Atomen.

Als Carbonyl-R³ Gruppen, umfassend unabhängig Carbonyl-R^{3a} bis ^{d}, werden die Säurereste der organischen Carbonsäuren verstanden, wie R³-(CO)-, die als verschiedene Carboxylgruppen entsprechend den Formeln I und/oder II an das Silizium gemäß Si-OR¹, wie oben ausgeführt, gebunden sind. Generell können die mit verschiedenen Kohlenwasserstoffresten funktionalisierten Carboxy-Gruppen (-OR¹ mit R¹=-(CO)-R³), d.h. die Säurereste der Formel I und/oder II aus natürlich vorkommenden oder synthetischen Fettsäuren erhalten werden, wie die gesättigten Fettsäuren Valeriansäure (Pentansäure, R³= C₄H₉), Capronsäure (Hexansäure, R³ = C₅H₁₁), Önanthsäure (Heptansäure, R³ = C₆H₁₃), Caprylsäure (Octansäure, R³ = C₇H₁₅), Pelargonsäure (Nonansäure R³ = C₈H₁₇), Caprinsäure (Decansäure, R³ = C₉H₁₉), Laurinsäure (Dodecansäure R³ = C₁₁H₂₃), Undecansäure (R³ = C₁₀H₂₁), Tridecansäure (R³ = C₁₂H₂₅), Myristinsäure (Tetradecansäure, R³ = C₁₃H₂₇), Pentadecansäure, R³ = C₁₄H₂₉) Palmitinsäure (Hexadecansäure, R³ = C₁₅H₃₁), Margarinsäure (Heptadecansäure, R³ = C₁₆H₃₃), Stearinsäure (Octadecansäure, R³ = C₁₇H₃₅), Nonadecandecansäure, (R³ = C₁₈H₃₇), Arachinsäure (Eicosan-/Icosansäure, R³ = C₁₉H₃₉), Behensäure (Docosansäure, R³ = C₂₁H₄₃), Lignocerinsäure (Tetracosansäure, R³ = C₂₃H₄₇), Cerotinsäure (Hexacosansäure, R³ = C₂₅H₅₁), Montansäure (Octaacosansäure, R³ = C₂₇H₅₅) und/oder Melissensäure (Triacontansäure, R³ = C₂₉H₅₉) aber auch die kurzkettigen ungesättigten Fettsäuren, wie Valerinsäure (Pentansäure, R³ = C₄H₉), Buttersäure (Butansäure, R³ = C₃H₇), Propionsäure (Propansäure, R³ = C₂H₅), Essigsäure (R³ = CH₃) und/oder Ameisensäure (R³ = H) und können als Silicium enthaltende Vorläuferverbindung der Formel I und/oder II, insbesondere als ansonsten rein organische Silanolhydrolyse- und/oder - kondensationskatalysatoren eingesetzt werden.

Gegenstand der Erfindung sind auch Zusammensetzungen umfassend Verbindungen der Formel I und/oder II erhältlich aus der Umsetzung einer Verbindung der Formel III mit zwei, drei oder vier verschiedene Fettsäuren, insbesondere der Formeln IVa, IVb, IVc und gegebenenfalls IVd, ausgewählt aus Caprylsäure, Oleinsäure, Laurinsäure, Caprinsäure, Stearinsäure, Palmitinsäure, Behensäure und/oder Myristinsäure zur Herstellung der Verbindung der Formel I und/oder II, wobei besonders bevorzugte Fettsäuren ausgewählt sind aus Caprylsäure, Laurinsäure, Caprinsäure, Behensäure und/oder Myristinsäure.

Die entsprechenden Carboxysilanverbindungen mit verschiedenen Carboxygruppen zeigen beispielsweise bei Vernetzungsreaktionen von mit Methoxysilan gepfropften PE-HD Polymeren, siehe Ausführungsbeispiele, durchschnittlich eine bessere Vernetzung als die freien Säuren. Insgesamt zeigen die festen Carboxysilane, mit Carboxyresten größer 14 C-Atome eine deutlich bessere Vernetzung als die flüssigen Carboxysilane mit Carboxyresten kleiner 14 C-Atomen und vernetzen deutlich besser als die Carboxysilane mit 3 gleichen Carboxyresten. Ohne an eine Theorie gebunden zu sein, wird angenommen, dass wenn drei von vier der Carboxy-Gruppen im Carboxysilan mehr als 14 C-Atome aufweisen, d.h. 15 C-Atome und mehr, die hergestellten Carboxysilane fest sind, auch, wenn eine dieser Carboxy-Gruppen 14 C-Atome oder weniger (unter 13 C-Atome) aufweist. Zudem wird eine höhere Kompatibilität mit der unpolaren Polymermatrix erzeugt, die sich in einer besseren Verteilung und damit einhergehend eine bessere Aktivität des Katalysators äußert.

Gemäß besonders bevorzugter Ausführungsformen der Erfindung kann jeweils in Formel I und/oder II A eine lineare, verzweigte oder cyclische alkyl-, alkenyl-, aryl-, alkylaryl-, aryl-alkylen-, Cycloalkenyl-alkylen-, halogenalkyl- und/oder acryloxyalkyl-funktionelle Gruppe sein, insbesondere eine lineare, verzweigte und/oder cyclische Alkyl-Gruppe oder Cycloalkenyl-alkylen- Gruppe mit 1 bis 18 C-Atomen und/oder jeweils eine lineare, verzweigte und/oder cyclische Arylalkylen-, Halogenalkyl-, Alkenyl-, Alkinyl- und/oder Acryloxyalkyl-Gruppe mit jeweils 1 bis 18 C-Atomen und/oder einer Aryl-Gruppe mit 6, 12 oder 14 C-Atomen und/oder eine Isoalkyl-Gruppe mit 1 bis 18 C-Atomen, eine Cycloalkyl-Gruppe mit 1 bis 18 C-Atomen, wie einer Cyclohexyl-Gruppe, 3-Methacryloxypropyl-Gruppe, einer 3-Acryloxypropyl-Gruppe, Fluoralkyl-Gruppe, Vinyl- Gruppe, Allyl-Gruppe, besonders bevorzugt ist A eine Alkenyl-Gruppe, weiter bevorzugt eine Vinyl-Gruppe, oder eine Alkyl-Gruppe, weiter bevorzugt eine Propyl- oder auch eine Halogenalkyl-Gruppe, wie vorzugsweise eine 3-Chlorpropyl-Gruppe. Gleichfalls bevorzugt ist A eine Cycloalkenyl-alkylen-Gruppe mit 1 bis 16 C-Atomen, vorzugsweise Cyclohexenyl-alkylen mit 1 bis 8 C-Atomen in der bivalenten Alkylen-Gruppe, besonders bevorzugt eine Cyclohexenyl-ethylen-, weiter bevorzugt eine 3- Cyclohexenyl-ethylen-Gruppe oder auch eine 2- Cyclohexenyl-ethylen- oder 1-Cyclohexenyl-ethylen-Gruppe, entsprechende Cyclohexenylpropylen-Gruppen sind ebenso bevorzugt wie Cyclohexadienyl-alkylen-Gruppen mit 1 bis 4 C-Atomen in der bivalenten Alkylen-Gruppe.

Gleichfalls ist A vorzugsweise unabhängig voneinander in Formel I und/oder II eine einwertige Olefin-Gruppe, wie insbesondere
- C₆H₉-(CH₂)₂-, bevorzugt 3-C₆H₉-(CH₂)₂-, 2-C₆H₉-(CH₂)₂-, 1-C₆H₉-(CH₂)₂-, oder auch C₆H₈-(CH₂)₂-, insbesondere 1,3-C₆H₈-(CH₂)₂- oder 2, 4-C₆H₈-(CH₂)₂-oder
- (R⁹)₂C=C(R⁹)-Mₖ-, worin R⁹ gleich oder verschieden sind und R⁹ ein Wasserstoffatom oder eine Methylgruppe oder eine Phenylgruppe ist, die Gruppe M eine Gruppe aus der Reihe - CH₂-, -(CH₂)₂-, -(CH₂)₃-, -O(O)C(CH₂)₃- oder -C(O)O-(CH₂)₃-darstellt, k gleich 0 oder 1 ist, wie Vinyl, Allyl, 3-Methaycryloxypropyl und/oder Acryloxypropyl, n-3-Pentenyl, n-4-Butenyl oder
- Isoprenyl, 3-Pentenyl, Hexenyl, -Alkylen-cyclohexenyl mit 1 bis 8 C-Atomen in der bivalenten Alkylen-Gruppe, bevorzugt 1 bis 4 C-Atome; -Ethylen-cyclohexenyl, Clyclohexenyl, Cyclohexadien, -Ethylen-cyclohexadien, Terpenyl, Squalanyl, Squalenyl, Polyterpenyl, Betulaprenoxy, cis/trans-Polyisoprenyl, oder
- R⁸-F_{g}-[C(R⁸)=C(R⁸)-C(R⁸)=C(R⁸)]ᵣ-F_{g}-, worin R⁸ gleich oder verschieden sind und R⁶ ein Wasserstoffatom oder eine Alkylgruppe mit 1 bis 3 C-Atomen oder eine Arylgruppe oder eine Aralkylgruppe, vorzugsweise eine Methylgruppe oder eine Phenylgruppe, bedeutet, Gruppen F gleich oder verschieden sind und F eine Gruppe aus der Reihe -CH₂-, -(CH₂)₂-, -(CH₂)₃-, -O(O)C(CH₂)₃- oder -C(O)O-(CH₂)₃- darstellt, r gleich 1 bis 100, insbesondere 1 oder 2, und g gleich 0 oder 1 sind, umfasst.

Vorzugsweise wird kein Alkohol mehr freigesetzt, wenn mindestens eine Silicium enthaltende Vorläuferverbindung verschiedener organischer Säuren, vorzugsweise der allgemeinen Formel I mit z = 1 oder 2 und/oder mit z = 0 und verschiedenen OR¹ umfassend -OR^{1a} = -O(CO)R^{3a}; -OR^{1b} = -O(CO)R^{3b}; -OR^{1c} = -O(CO)R^{3c} und/oder -OR^{1d} = -O(CO)R^{3d} mit ungesättigten Carboxylat-Resten, insbesondere einem Tetracarboxysilan, entspricht, auf ein Basispolymer aufgepfropft wird oder mit einem Monomer und/oder Prepolymer des Basispolymers co-polymerisiert wird, gegebenenfalls in Gegenwart eines Radikalbildners, oder mit einem entsprechenden carboxylsubstituierten Silan gepfropften Basispolymer vermischt wird und gegebenenfalls nach der Formgebung, vorzugsweise unter Wärmezufuhr, als Katalysator die Vernetzung in Gegenwart von Feuchtigkeit bewirkt. Zusätzlich kann das Pfropfen oder Co-Polymerisieren in Gegenwart einer organofunktionellen Silan-Verbindung, wie einem ungesättigten Alkoxysilan der allgemeinen Formel V ((B)_{b}SiR⁴_{c}(OR⁵)_{3-d-c}), wie nachstehend definiert, erfolgen.

Bevorzugt ist in der Formel I z = 1 und x = 0 oder z = 0 und x = 1 für die Tricarboxysilane und/oder für die Tetracarboxysilane z = 0 und x = 0. Gleichfalls bevorzugt sind die entsprechenden oligomeren Siloxane der Formel II.

So sind auf verschiedenen Carbonsäuren basierende bzw. verschiedene Carbonsäuren freisetzende Silane der Formel I und/oder II bevorzugt, die zwei, drei oder vier verschiedene Carbonsäuren ausgewählt aus Caprinsäure, Myristinsäure, Caprylsäure, Ölsäure, Stearinsäure, Palmitinsäure und Laurinsäure aufweisen.

Besonders bevorzugte Zusammensetzungen umfassend Vorläuferverbindungen der Formel I und/oder II oder auch die Vorläuferverbindung der Formel I oder II als solche oder deren Mischungen in denen
(i) jeweils unabhängig voneinander in Formel I und/oder II z gleich 1 und x gleich 0 ist und A einer linearen, verzweigten oder cyclischen Alkyl-, Alkenyl-, Halogenalkyl-, Cycloalkenyl-alkylen-, insbesondere Cyclohexenyl-alkylen- oder Alkenyl-Gruppe mit 1 bis 8 C-Atomen entspricht und R¹ unabhängig voneinander zwei oder drei verschiedenen Carbonyl-R³ Gruppen (-(C=O)R³-Gruppen) entspricht, bevorzugt drei verschiedenen Carbonyl-R³ Gruppen entspricht, d.h. -(C=O)R³ ist gleich - (C=O)R^{3a bis c}, wobei unabhängig R³ ausgewählt ist aus einem unsubstituierten Kohlenwasserstoffrest mit 3 bis 45 C-Atomen, bevorzugt einem Alkyl- oder Alkenyl-Rest, insbesondere mit 7 bis 45 C-Atomen, bevorzugt 7 bis 26 C-Atome oder
(ii) jeweils unabhängig voneinander in Formel I und/oder II z gleich 0 und x gleich 0 ist und R¹ unabhängig voneinander zwei, drei oder vier verschiedenen Carbonyl-R³ Gruppen (-(C=O)R³-Gruppen) entspricht, d.h. -(C=O)R³ ist gleich -(C=O)R^{3a bis d}, wobei R³ ausgewählt ist aus einem unsubstituierten Kohlenwasserstoffrest mit 3 bis 45 C-Atomen, bevorzugt einem Alkyl- oder Alkenyl-Rest, insbesondere mit 7 bis 45 C-Atomen, besonders bevorzugt mit 7 bis 26 C-Atomen.

Überraschend wurde gefunden, dass der Aggregatzustand der Zusammensetzung oder auch der Vorläuferverbindung der Formel I und/oder II oder deren Mischungen eingestellt werden kann, wenn gezielt jeweils unabhängig voneinander in Formel I und/oder II
- R¹ unabhängig voneinander mindestens zwei verschiedenen Carbonyl-R³ Gruppen (- (C=O)R^{3a bis c oder d}-Gruppen) entspricht, bevorzugt drei oder vier, wobei in den verschiedenen Carbonyl-R³ Gruppen
   (a) unabhängig voneinander mindestens ein erster R³-Rest ausgewählt ist aus einem unsubstituierten Kohlenwasserstoffrest mit 3 bis 14 C-Atomen, insbesondere mit 7 bis 14 C-Atomen, vorzugsweise 8 bis 14 C-Atome, bevorzugt mit 9 bis 13 oder 9 bis 14 C-Atomen, bevorzugt von Alkyl- oder Alkenyl-Resten, und
   (b) unabhängig voneinander mindestens ein weiterer R³-Rest unabhängig ausgewählt ist aus einem unsubstituierten Kohlenwasserstoffrest mit 15 bis 45 C-Atomen, insbesondere 15 bis 26 C-Atome, bevorzugt 15 bis 20 C-Atome, bevorzugt von Alkyl- oder Alkenyl-Resten.

Bevorzugte vorgenannte Kohlenwasserstoffreste R³ der Carbonyl-R³-Gruppen (-(C=O)R³-Gruppen) entsprechen Alkyl- oder Alkenyl-Resten mit der genannten Anzahl an C-Atomen.

Bevorzugt basieren die carboxyfunktionalisierten Silicium enthaltenden Vorläuferverbindungen der Formel I und/oder II auf verschiedenen Fettsäure-Resten, d.h. insbesondere auf der Umsetzung eines Halogensilans der Formel III mit verschiedenen Fettsäuren (R¹OH = R^{1a}OH, R^{1b}OH, R^{1c}OH und/oder R^{1d}OH), und weisen jeweils einen hydrophoben KW-Rest auf, der ausreichend hydrophob ist, nach Freisetzung keinen unangenehmen Geruch aufweist und nicht aus den hergestellten Polymeren ausblüht. Ausreichend hydrophob ist ein KW-Rest, wenn die jeweilige Säure in dem Polymer oder einem Monomer oder Prepolymer dispergierbar ist. Besonders bevorzugte Säure-Reste (-OR¹) in den Formeln I und/oder II resultieren aus den folgenden Säuren, wie Caprinsäure, Laurinsäure, Myristinsäure, Stearinsäure, Palmitinsäure und/oder Behensäure.

Ebenfalls bevorzugt können die verschiedenen natürlich vorkommenden oder synthetischen ungesättigten Fettsäuren, d. h. mindestens eine R³-Gruppe in den verschiedenen -OR¹ in Formel I und/oder II entspricht mit R¹ = -(CO)-R³ gleich R^{1a bis d} = -(CO)-R^{3a bis d}, mit R³ einer Alkenyl-Gruppe, umfassend Cycloalkenyl-alkylen-Gruppen, zu den Vorläuferverbindungen der Formel I und/oder II umgesetzt werden, so dass die Verbindung der Formel I und/oder II mindestens einen der nachfolgenden Reste R³ in -OR¹ = -O(CO)-R³ aufweisen können. Diese Verbindungen der Formel I und/oder II können gleich zwei Funktionen erfüllen, einerseits dienen sie als Silanhydrolysekatalysator und/oder als Silanolkondensationskatalysator bzw. deren Vorläufer und sie können durch ihre ungesättigten Kohlenwasserstoffreste (R³) direkt an der radikalischen Polymerisation teilnehmen. Bevorzugte ungesättigte Fettsäuren sind Sorbinsäure (R³ = C₅H₇), Undecylensäure (R³= C₁₀H₁₉), Palmitoleinsäure (R³ = C₁₅H₂₉), Ölsäure (R³ = C₁₇H₃₃), Elaidinsäure (R³ = C₁₇H₃₃), Vaccensäure (R³ = C₁₉H₃₇), Icosensäure (R³ = C₂₁H₄₁), Cetoleinsäure (R³ = C₂₁H₄₁), Erucansäure (R³ = C₂₁H₄₁), Nervonsäure (R³ = C₂₃H₄₅), Linolsäure (R³ = C₁₇H₃₁), alpha-Linolensäure (R³ = C₁₇H₂₉), gamma-Linolensäure (R³ = C₁₇H₂₉), Arachidonsäure (R³ = C₁₉H₃₁), Timnodonsäure (R³ = C₁₉H₂₉), Clupanodonsäure (R³ = C₂₁H₃₃), Rizinolsäure (12-Hydroxy-9-octadecensäure, (R³ = C₁₇H₃₃O) und/oder Cervonsäure (R³ = C₂₁H₃₁) . Besonders bevorzugt sind Vorläuferverbindungen der Formel I und/oder II enthaltend mindestens einen Rest der Ölsäure (R³ = C₁₇H₃₃).

Besonders bevorzugte Zusammensetzungen umfassen, insbesondere zusätzlich zu den vorgenannten Merkmalen, mindestens eine carboxyfunktionalisierte Silicium enthaltende Vorläuferverbindung der Formel I
(iii) mit z gleich 1 und A gleich H₃C(CH₂)₂-, H₂C=CH₂-, ClCH₂(CH₂)₂-, Cyclohexenyl-alkylen- und/oder Cyclohexadienyl-alkylen- mit 1 bis 8 C-Atome in der bivalenten Alkylen-Gruppe, wie C₆H₉-(CH₂)₂-, vorzugsweise 3-C₆H₉- (CH₂)₂-, 2-C₆H₉-(CH₂)₂-, 1-C₆H₉-(CH₂)₂-; oder C₆H₈-(CH₂)₂-, 1,3-C₆H₈-(CH₂)₂- oder 2,4-C₆H₈-(CH₂)₂- und OR¹ in Formel I mit zwei oder drei verschiedenen R¹ (R¹ = R^{1a bis c}) ausgewählt aus -COC₇H₁₅, -COC₉H₁₉, -COC₁₁H₂₃, -COC₁₃H₂₇, - COC₁₅H₃₁, -COC₁₇H₃₅ und -COC₂₁H₄₃, oder
(iv) mit z gleich 0 und OR¹ in Formel I mit zwei, drei oder vier verschiedenen R¹ (R¹ = R^{1a} bis ^{d}) ausgewählt aus -COC₇H₁₅, -COC₉H₁₉, -COC₁₁H₂₃, -COC₁₃H₂₇, -COC₁₅H₃₁, -COC₁₇H₃₅ und - COC₂₁H₄₃,
und gegebenenfalls oligomeren Verbindungen gebildet aus den Vorläuferverbindungen der Formel I gemäß der idealisierten Formel II, insbesondere mit a gleich 1 und b gleich 1, oder eine Mischung dieser.

Beispiele dafür sind insbesondere mit A gleich Alkyl-Gruppe, wie H₃C (CH₂)₂-, (H₉C₄) -, (H₁₇C₈) -, (H₃₃C₁₆) -; Alkenyl-Gruppe, wie H₂C=CH₂-, Cycloalkenyl-alkylen- mit 1 bis 16 C-Atomen, insbesondere Cyclohexenyl-alkylen- und/oder Cyclohexadienyl-alkylen- mit je 1 bis 8 C-Atomen in der bivalenten Alkylen-Gruppe, wie insbesondere C₆H₉-(CH₂)₂-, 3-C₆H₉-(CH₂)₂-, 2-C₆H₉-(CH₂)₂-, 1-C₆H₉-(CH₂)₂-, C₆H₈-(CH₂)₂-, 1,3-C₆H₈-(CH₂)₂- oder 2, 4-C₆H₈-(CH₂)₂-, insbesondere -ethylen-2-cyclohex-3-enyl oder Isomere mit anderer Position der Doppelbindung, und/oder Halogenalkyl-Gruppe, wie C1CH₂(CH₂)₂-:
A-Si(OCOC₇H₁₅)ₚ(OCOC₁₁H₂₃)ₚ(OCOC₁₃H₂₇)ₚ(Myristyl-, Lauryl-, Capryl-)
A-Si(OCOC₁₃H₂₇)ₚ(OCOC₁₅H₃₁)ₚ(OCOC₁₇H₃₅)ₚ(Myristyl-, Palmityl-, Stearyl-)
(H₁₉C₉OCO)ₚ(A)Si(OCOC₇H₁₅)ₚ(OCOC₁₁H₂₃)ₚ(OCOC₁₃H₂₇ₚ, (Caprinyl-, Myristyl-, Lauryl-, Capryl-);
(H₄₃C₂₁OCO)ₚ(A)Si(OCOC₁₃H₂₇)ₚ(OCOC₁₅H₃₁)ₚ(OCOC₁₇H₃₅)ₚ (Behenyl-, Myristyl-, Palmityl-, Stearyl-);
(H₁₉C₉OCO)ₚ(A)Si(OCOC₇H₁₅)ₚ(OCOC₁₁H₂₃)ₚ(OCOC₁₃H₂₇)ₚ,
(H₁₉C₉OCO)ₚSi(OCOC₇H₁₅)ₚ(OCOC₁₁H₂₃)ₚ(OCOC₁₃H₂₇)ₚ, (Caprinyl-, Myristyl-, Lauryl-, Capryl) ; (H₄₃C₂₁OCO)ₚSi (OCOC₁₃H₂₇)ₚ(OCOC₁₅H₃₁)ₚ(OCOC₁₇H₃₅)ₚ
mit jeweils p gleich 0, 1, 2 oder 3, mit der Maßgabe, dass mindestens bei zwei verschiedenen Fettsäure-Resten p gleich 1 ist und die Summe aller p je Siliciumverbindung gleich 3 ist in Si-A substituierten Vorläuferverbindungen und die Summe aller p gleich 4 in tetra-Carboxy funktionalisierten Vorläuferverbindungen der Formel I, sowie gegebenenfalls entsprechender oligomerer Verbindungen der Vorläuferverbindungen der Formel I gemäß der idealisierten Formel II sind, insbesondere mit a gleich 1 und b gleich 1, oder eine Mischung dieser.

Besonders bevorzugte - aber nicht darauf beschränkte - carboxyfunktionalisierte Silicium enthaltende Vorläuferverbindungen der Formel I ausgewählt sind aus H₃C(CH₂)₂-Si(OCOC₇H₁₅)ₚ(OCOC₁₁H₂₃)ₚ(OCOC₁₃H₂₇)ₚ, H₃C(CH₂)₂-Si(OCOC₁₃H₂₇)ₚ(OCOC₁₅H₃₁)ₚ(OCOC₁₇H₃₅)ₚ, H₂C=CH₂-Si(OCOC₇H₁₅)ₚ(OCOC₁₁H₂₃)ₚ(OCOC₁₃H₂₇)ₚ, H₂C=CH₂-Si(OCOC₁₃H₂₇)ₚ(OCOC₁₅H₃₁)ₚ(OCOC₁₇H₃₅)ₚ C₆H₉-(CH₂)₂-Si(OCOC₇H₁₅)ₚ(OCOC₁₁H₂₃)ₚ(OCOC₁₃H₂₇)ₚ C₆H₉-(CH₂)₂-Si(OCOC₁₃H₂₇)ₚ(OCOC₁₅H₃₁)ₚ(OCOC₁₇H₃₅)ₚ, ClCH₂(CH₂)₂-Si(OCOC₇H₁₅)ₚ(OCOC₁₁H₂₃)ₚ(OCOC₁₃H₂₇)ₚ, ClCH₂(CH₂)₂-Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)₂)Si(OCOC₇H₁₅)ₚ(OCOC₁₁H₂₃)ₚ(OCOC₁₃H₂₇)ₚ, (H₄₃C₂₁OCO)ₚ(ClCH₂(CH₂)₂Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)2)Si(OCOC₇H₁₅)ₚ(OCOC₁₁H₂₃)ₚ(OCOC₁₃H₂₇)ₚ, (H₁₉C₉OCO)ₚSi(OCOC₇H₁₅)ₚ(OCOC₁₁H₂₃)ₚ(OCOC₁₃H₂₇)ₚ, (H₄₃C₂₁OCO)ₚSi(OCOC₁₃H₂₇)ₚ(OCOC₁₅H₃₁)ₚ(OCOC₁₇H₃₅)ₚ (H₃₃C₁₆)-Si(OCOC₇H₁₅)ₚ(OCOC₁₁H₂₃)ₚ(OCOC₁₃H₂₇)ₚ (H₃₃C₁₆)-Si(OCOC₁₃H₂₇)ₚ(OCOC₁₅H₃₁)ₚ(CCOC₁₇H₃₅)ₚ, (H₁₇C₈)-Si(OCOC₇H₁₅)ₚ(OCOC₁₁H₂₃)ₚ(OCOC₁₃H₂₇)ₚ (H₁₇C₈)-Si(OCOC₁₃H₂₇)ₚ(OCOC₁₅H₃₁)ₚ(OCOC₁₇H₃₅)ₚ, (H₉C₄)-Si(OCOC₇H₁₅)ₚ(OCOC₁₁H₂₃)ₚ(OCOC₁₃H₂₇)ₚ (H₉C₄)-Si(OCOC₁₃H₂₇)ₚ(OCOC₁₅H₃₁)ₚ(OCOC₁₇H₃₅)ₚ,
mit jeweils p gleich 0, 1, 2 oder 3, mit der Maßgabe, dass mindestens bei zwei verschiedenen Carboxy-Gruppen p gleich 1 ist, bevorzugt bei drei verschiedenen Carboxy-Gruppen, und die Summe aller p je Silicium enthaltender Vorläuferverbindung gleich 3 ist, wenn in Formel I z = 1 ist und die Summe aller p gleich 4 in tetra-Carboxy funktionalisierten Vorläuferverbindungen der Formel I mit z = 0 ist, sowie gegebenenfalls entsprechender oligomerer Verbindungen dieser Vorläuferverbindungen oder eine Mischung dieser.

Weitere zweckmäßige Säuren aus denen die Vorläuferverbindungen der Formel I und/oder II mit R³ -COO bzw. R¹O hergestellt werden können sind Glutarsäure, Milchsäure (R¹ gleich (CH₃)(HO)CH-), Zitronensäure (R¹ gleich HOOCCH₂C(COOH) (OH)CH₂-), Vulpinsäure, Terephthalsäure, Gluconsäure, Adipinsäure, wobei auch alle Carboxylgruppen Si-funktionalisiert sein können, Benzoesäure (R¹ gleich Phenyl), Nicotinsäure (Vitamin B3, B5). Es können aber auch die natürlichen oder auch synthetische Aminosäuren eingesetzt werden, so dass R¹ entsprechenden Resten entspricht, wie ausgehend von Tryptohan, L-Arginin, L-Histidin, L-Phenyalanin, L-Leucin, wobei L-Leucin bevorzugt verwendet werden kann. Entsprechend können auch die entsprechenden D-Aminosäuren oder Mischungen von L- und D-Aminosäuren eingesetzt werden, oder eine Säure, wie D[(CH₂)_{d})COOH]₃ mit D = N, P und d unabhängig = 1 bis 12, vorzugsweise 1, 2, 3, 4, 5, oder 6, in der unabhängig die Hydroxygruppe jeder Carbonsäurefunktion Si-funktionalisiert sein kann.

Somit können auch entsprechende Verbindungen der Formel I und/oder II basierend auf Resten dieser Säuren als Silanhydrolysekatalysator und/oder Silanolkondensationskatalysator verwendet werden.

Die Silicium enthaltende Vorläuferverbindung einer organischen Säure ist insbesondere in hydrolysierter Form als Silanhydrolyse- und/oder -Silanolkondensationskatalysator über die freigesetzte organische Säure aktiv sowie selbst in hydrolysierter oder nicht hydrolysierter Form zur Pfropfung auf einem Polymer und/oder Co-Polymerisierung mit einem Basispolymer, Polymer/Monomer oder Prepolymer oder zur Vernetzung, beispielsweise als Haftvermittler, geeignet. In hydrolysierter Form trägt die gebildete Silanol-Verbindung bei der Kondensation zur Vernetzung mittels gebildeter Si-O-Si-Siloxanbrücken und/oder Si-O-Substrat bzw. Si-O-Trägermaterial bei. Diese Vernetzung kann mit anderen Silanolen, Siloxanen oder generell mit zur Vernetzung geeigneten funktionellen Gruppen an Substraten, Füllstoffen und/oder Trägermaterialien erfolgen Bevorzugte Füllstoffe und/oder Trägermaterialien sind daher Aluminiumhydroxide, Magnesiumhydroxide, pyrogene Kieselsäure, gefällte Kieselsäure, Silikate sowie weitere der nachfolgend genannten Füllstoffe und Trägermaterialien.

Als Alkyl-Gruppe R² eigenen sich insbesondere lineare, verzweigte oder cyclische Alkyl- Gruppen mit 1 bis 24 C-Atomen, bevorzugt mit 1 bis 18 C-Atomen, besonders bevorzugt mit 1 bis 4 C-Atomen bei Alkyl-Gruppen. Als Alkyl-Gruppe R² eignen sich insbesondere Ethyl-, n-Propyl- und/oder i-Propyl-Gruppen. Als substituierte Alkyl-Gruppen eignen sich insbesondere halogenierte Kohlenwasserstoffe, wie 3-Halogenpropyl-, beispielsweise 3-Chlorpropyl oder 3-Brompropyl-Gruppen, die gegebenenfalls einer nucleophilen Substitution zugänglich sind oder auch die in PVC angewendet werden können. Als Aryl-Gruppe eignet sich Phenyl- oder Benzyl.

So sind auch Silicium enthaltende Vorläuferverbindungen einer organischen Säure der allgemeinen Formel I und/oder II bevorzugt, die alkylsubstituierten Di- oder Tricarboxysilanen mit z = 0 und x = 1 oder 2 und auf verschiedenen Carbonsäuren basieren bzw. ein Silanol und verschiedene Carbonsäuren freisetzt. Beispiele dafür sind Methyl-, Dimethyl-, Ethyl- oder Methylethyl-substituierte Carboxysilane der Formel I, bevorzugt basierend auf zwei oder drei verschiedenen Carbonsäuren ausgewählt aus Caprinsäure, Myristinsäure, Caprylsäure, Ölsäure, Stearinsäure, Palmitinsäure und Laurinsäure.

Um eine leichte Handhabung bei der Dosierung der Zusammensetzung umfassend im Wesentlichen carboxyfunktionalisierte Silicium enthaltende Vorläuferverbindungen der Formel I und/oder II zu ermöglichen können gemäß einer Alternative flüssige Vorläuferverbindungen bevorzugt sein, insbesondere, jene, die im Bereich von etwa 10 °C bis 80 °C flüssig sind, insbesondere zwischen 10 bis 60 °C, bevorzugt zwischen 10 bis 40 °C, besonders bevorzugt zwischen 10 bis 35 °C, jeweils bei Normaldruck (um 1013 hPa).

Gemäß einer weiteren bevorzugten Alternative kann die Zusammensetzung umfassend mindestens eine Vorläuferverbindung der Formel I und/oder II auf ein Trägermaterial aufgebracht, in ein Trägermaterial eingelagert und/oder eingekapselt sein, insbesondere ist das Trägermaterial ein mineralisches Material oder ein thermoplastisches Basispolymer, ein silangepfropftes Basispolymer, ein silan-copolymerisiertes Basispolymer, ein Monomer dieses Basispolymeres, ein Prepolymer dieser Basispolymere und/oder Mischungen dieser. Als mineralische Materialien, beispielsweise als Füllstoffe, kommen insbesondere auch die Folgenden in Betracht:

Bevorzugte Trägermaterialien und/oder Füllstoffe sind dementsprechend Metallhydroxide mit stöchiometrischem Anteil oder, in ihren unterschiedlichen Entwässerungsstufen, mit substöchiometrischem Anteil an Hydroxylgruppen bis hin zu Oxiden mit vergleichsweise wenigen restlichen, aber durch DRIFT-IR-Spektroskopie nachweisbaren Hydroxylgruppen. Beispiele für geeignete Trägermaterialien oder Füllstoffe sind Aluminiumtrihydroxid (ATH), Aluminiumoxidhydroxid (AlOOH.aq), Magnesiumdihydroxid (MDH), Brucit, Huntit, Hydromagnesit, Glimmer und Montmorillonit. Ferner können als Füllstoff Kalziumcarbonat, Talkum sowie Glasfasern eingesetzt werden. Des Weiteren können so genannte "char former", wie Ammoniumpolyphosphat, Stannate, Borate, Talk, oder solche in Kombination mit anderen Füllstoffen eingesetzt werden.

Zudem kann die Zusammensetzung weitere Zusatzstoffe aufweisen, wie sind beispielsweise Titandioxid (TiO₂), Talkum, Ton, Quarz, Kaolin, Bentonit, Calciumcarbonat (Kreide, Dolomit), oder auch Farben, Pigmente, Talkum, Ruß, SiO₂, Fällungskieselsäure, pyrogene Kieselsäure, Aluminiumoxide, wie alpha und/oder gamma-Aluminiumoxid, Aluminiumoxidhydroxide, Böhmit, Barit, Bariumsulfat, Kalk, Silikate, Aluminate, Aluminiumsilikate und/oder ZnO oder Mischungen dieser. Vorzugweise liegen die Trägermaterialien oder Zusatzstoffe, wie Pigmente, Füllstoffe, pulverförmig, partikulär, porös, quellbar oder gegebenenfalls schaumförmig vor.

Ferner ist eine gute Dispergierbarkeit oder Homogenisierbarkeit bis hin zu einer guten Löslichkeit der Zusammensetzung umfassend die carboxyfunktionalisierte Vorläuferverbindung der Formel I und/oder II erwünscht, insbesondere in organofunktionellen Silanen, organofunktionellen Siloxanen, bevorzugt auch in silangepfropften, silan-co-polymerisierten Polymeren, entsprechenden Monomeren oder Prepolymeren. Besonders bevorzugt sind somit Zusammensetzungen umfassend die carboxyfunktionalisierte Silicium enthaltende Vorläuferverbindung der Formel I, Formel II oder Mischungen dieser, die eine Löslichkeit von größer 40 % in einem kohlenwasserstofffunktionalisierten Alkoxysilan oder entsprechendem Siloxan, insbesondere einem alkenyl-funktionalisierten Alkoxysilan oder Siloxan aufweisen. bevorzugt in Vinyltrimethoxysilan oder Vinyltriethoxysilan, insbesondere ist die Löslichkeit größer 50 % in kohlenwasserstoff-funktionalisiertem Alkoxysilan.

Erfindungsgemäße Zusammensetzungen eignen sich besonders gut zur Anwendung in einem Monosil-Verfahren, Sioplas-Verfahren mit thermoplastischen Basispolymeren oder einem Co-Polymerisationsverfahren mit Monomeren und/oder Prepolymeren von thermoplastischen Basispolymeren.

Insbesondere ist die Zusammensetzung im Wesentlichen wasserfrei, um eine ungewünschte Hydrolyse und/oder Kondensation vor der eigentlichen Verwendung im Monosil-, Sioplas-Prozess oder Co-Kondensationsverfahren zu unterbinden.

Gegenstand der Erfindung sind auch Zusammensetzungen, insbesondere zur Vernetzung von thermoplastischen Basispolymeren, bevorzugt als Formulierung, umfassend mindestens eine Silicium enthaltende Vorläuferverbindung verschiedener organischer Säuren der allgemeinen Formel I und/oder II entsprechend vorstehender Definition als Komponente-A, und
- gegebenenfalls als Komponente-B einen Radikalbildner und
- gegebenenfalls als Komponente-C eine organofunktionelle Silan-Verbindung,
   insbesondere ein ungesättigtes Alkoxysilan, bevorzugt der Formel V,
   (B)_{b}SiR⁴_{c}(OR⁵)_{3-d-c} (V), wobei d, c, b, a, B, R⁴ und R⁵ nachstehend definiert sind, besonders bevorzugt ist B eine Vinyl-Gruppe, insbesondere ist das ungesättigte Alkoxysilan ein Vinyltriethoxysilan, Vinyltrimethoxysilan oder eine Mischung dieser,
- gegebenenfalls liegt die Zusammensetzung flüssig vor, beispielsweise als Silicium enthaltende Vorläuferverbindung der Formel I und/oder II, gegebenenfalls zusammen mit einem Radikalbilder, wie vorzugsweise Dicumylperoxid, tert.-Butylcumylperoxid, Bis(*tert*.-butylperoxy)-diisopropyl-benzol, 1,1-Di(tert.-butylperoxy)-3,3,5-trimethylcyclohexan oder 2,5-Dimethyl-2,5-di-*tert*.-butylperoxy-hexan, in einem ungesättigten Alkoxysilan, wie Vinyltrimethoxysilan oder Vinyltriethoxysilan, insbesondere liegt es gelöst im Alkoxysilan vor,
- gegebenenfalls kann mindestens eine der vorstehenden Komponenten-A, -B und/oder -C geträgert oder eingekapselt sein. Darüber hinaus kann die Zusammensetzung auch weiter Formulierungshilfsmittel und/oder Prozesshilfsmittel als Komponente(n)-D enthalten, wie beispielweise Stabilisatoren oder weitere übliche Formulierungshilfsmittel.

Besonders bevorzugte Zusammensetzungen, insbesondere in Form einer Formulierung, umfassen mindestens eine Silicium enthaltende Vorläuferverbindung verschiedener organischer Säuren der allgemeinen Formel I und/oder II oder Mischungen dieser entsprechend vorstehender Definition als Komponente-A mit 1 bis 25 Gew.-%, insbesondere 1,5 bis 20 Gew.-%, besonders bevorzugt 2,0 bis 18,0 Gew.-%, und alle dazwischen liegenden Werte, gegebenenfalls als Komponente-B einen Radikalbildner mit 1 bis 12 Gew.-%, insbesondere 1,5 bis 11 Gew.-%, bevorzugt 2 bis 10 Gew.-% und besonders bevorzugt 2,2 bis 9,0 Gew.-% sowie alle dazwischen liegenden Werte, und gegebenenfalls als Komponente-C eine organofunktionelle Silan-Verbindung, insbesondere ein ungesättigtes Alkoxysilan, bevorzugt der Formel V, besonders bevorzugt ein Vinyltrialkoxysilan, mit 48 bis 98 Gew.-%, insbesondere 55 bis 97,5 Gew.-%, bevorzugt 60 bis 95, besonders bevorzugt 70 bis 92 Gew.-%, besonders vorzugsweise 72 bis 90 Gew.-% sowie alle dazwischen liegenden Werte, und gegebenenfalls als Komponente(n)-D mit 0 bis 15,0 Gew.-%, insbesondere 0,1 bis 8,0 Gew.-%, bevorzugt 0,2 bis 5,0 Gew.-%, besonders bevorzugt 0,5 bis 3,0 Gew.-% sowie alle dazwischen liegenden Werte, wobei in die vorgenannten Komponenten unabhängig voneinander in der Zusammensetzung insgesamt 100 Gew.-% ergeben.

Eine bevorzugte Zusammensetzung, vorzugsweise als Formulierung, die insbesondere zur Herstellung von Polymercompounds geeignet ist, enthält als Komponente-B mindestens einen Radikalbildner. Bevorzugte Radikalbildner sind organische Peroxide und/oder organische Perester oder Mischungen dieser, wie vorzugsweise tert.-Butylperoxypivalat, tert.-Butylperoxy-2-ethylhexanoat, Dicumylperoxid, Di-tert.-Butylperoxid, tert.-Butylcumylperoxid, 1,3-Di(2-tert.-butylperoxy-isoproyl)benzol, 2,5-Dimethyl-2,5-bis(tert.-butylperoxy)hexin(3), Di-tert.-amylperoxid, 1,3,5-Tris(2-tert.-butylperoxy-isopropyl)benzol, 1-Phenyl-1-tert.-butylperoxyphthalid, alpha,alpha'--Bis(tert.-butylperoxy)-diisopropyl-benzol, 2,5-Dimethyl-2,5-di-tert.-bütylperoxy-hexan, 1,1-Di(tert.-butylperoxy)-3,3,5-trimethylcyclohexan (TMCH). Zweckmäßig kann auch die Verwendung von n-Butyl-4,4-di(tert.-butylperoxy)valerat, Ethyl-3,3-di(tert.-butylperoxy)butylat und/oder 3,3,6,9,9-Hexamethyl-1,2,4,5-tetraoxa-cyclononan sein.

Gleichfalls Gegenstand der Erfindung ist eine Formulierung umfassend die erfindungsgemäße Zusammensetzung oder eine Verbindung der Formel I, II oder Mischungen dieser, nach einem der Ansprüche 1 bis 11.

Überraschenderweise wurde gefunden, dass die Zusammensetzung die eine hydrolysierbare Vorläuferverbindung mindestens zwei verschiedener organischer Säuren der allgemeinen Formeln I und/oder II und gegebenenfalls zusätzlich eine organofunktionelle Silan-Verbindung, insbesondere der Formel V, wie nachfolgend definiert, enthält, sich in einfacher und wirtschaftlicher Weise mit thermoplastischen Basispolymeren, Monomeren und/oder Prepolymeren der Basispolymere zu Polymercompounds umsetzen lässt und die genannten Nachteile, wie Toxizität und Geruchsbeeinträchtigung, nicht aufweist. Je nach Zusammensetzung werden in dem Verfahren zur Herstellung von Polymercompounds auch insgesamt keine Alkohole mehr freigesetzt.

Beispielsweise, wenn mindestens eine Silicium enthaltende Vorläuferverbindung verschiedener organischer Säuren, beispielsweise der allgemeinen Formel I mit z = 0, 1 oder 2 und/oder II, insbesondere mit z = 0 oder 1, und OR¹ einem ungesättigten Carboxylat-Rest entspricht, auf ein Basispolymer aufgepfropft wird oder mit einem Monomer und/oder Prepolymer des Basispolymers co-polymerisiert wird, gegebenenfalls in Gegenwart eines Radikalbildners, oder mit einem entsprechenden carboxylsubstituierten Silan gepfropften Basispolymer vermischt wird und gegebenenfalls nach der Formgebung eine Vernetzung in Gegenwart von Feuchtigkeit erfolgt.

Zusätzlich oder alternativ kann das Pfropfen oder Co-Polymerisieren in Gegenwart einer organofunktionellen Silan-Verbindung, wie einem ungesättigten Alkoxysilan der allgemeinen Formel V, wie nachfolgend definiert, erfolgen.

Ganz besonders vorzugsweise enthält die erfindungsgemäße Zusammensetzung als organofunktionelle Silan-Verbindung, insbesondere der Formel V, Vinyltrimethoxysilan, Vinyltriethoxysilan, Vinylmethyldialkoxysilan, Vinyltriethoxymethoxysilan (VTMOEO), Vinyltri-i-propoxysilan, Vinyltri-n-butoxysilan, 3-Methacryloxypropyltriethoxysilan, 3-Methacryloxypropyltrimethoxysilan (MEMO) und/oder Vinylethoxydimethoxysilan und/oder Allylalkoxysilane, wie Allyltriethoxysilan, ungesättigte Siloxane, wie vorzugsweise oligomere Vinylsiloxane oder Mischungen der genannten Verbindungen. Bevorzugte organofunktionelle Silan-Verbindungen enthalten entweder eine Vinyl- oder Methacryl-Gruppe, da diese Verbindungen gegenüber Radikalen reaktiv und zur Pfropfung auf eine Polymerkette oder zur Co-Polymerisation mit Monomeren, Prepolymeren geeignet sind.

Gegenstand der Erfindung ist auch eine Zusammensetzung, insbesondere mit den einem oder mehreren der vorgenannten Merkmale, umfassend eine carboxyfunktionalisierte Silicium enthaltende Vorläuferverbindung, die mindestens zwei mit verschiedenen Kohlenwasserstoffresten funktionalisierte Carboxy-Gruppen aufweist, vorzugsweise drei oder vier verschiedene Carboxy-Gruppen, und erhalten wird aus der Umsetzung eines Halogensilans der allgemeinen Formel III,

(A)_{z}SiR²ₓ(Hal)_{4-(z+x)} (III)

- mit z gleich 0, 1 oder 2 und x gleich 0, 1 oder 2 mit (x+z) kleiner gleich 2, A wie vor- und nachstehend definiert, R² wie definiert, und Hal unabhängig Chlor oder Brom,
   mit einem mindestens molaren stöchiometrischen Verhältnis in Bezug auf die Halogen-Gruppen der Formel III mit mindestens zwei verschiedenen organischen Säuren der Formel IV, d. h. der Formeln IVa und IVb gemäß Untergruppierung, oder bevorzugt
- bei z gleich 1 und x gleich 0 mit einem mindestens molaren stöchiometrischen
   Verhältnis in Bezug auf die Halogen-Gruppen der Formel III mit mindestens zwei oder drei verschiedenen organischen Säuren der Formel IV, d.h. der Formeln IVa, IVb und/oder IVc, oder bevorzugt
- bei z gleich 0 und x gleich 0 mit einem mindestens molaren stöchiometrischen
   Verhältnis in Bezug auf die Halogen-Gruppen der Formel III mit mindestens zwei, drei oder vier verschiedenen organischen Säuren der Formel IV, d.h. Formeln IVa, IVb, IVc und/oder IVd,
   wobei in den verschiedenen organischen Säuren der Formel IV

   HOR¹ (IV)
- R¹ (d. h. R1^{a, 1b, 1c und/oder 1d}) unabhängig voneinander in Formel IV verschiedenen Carbonyl-R³ Gruppen entspricht, also Carbonyl-R^{3a, 3b, 3c und/oder 3d}, wobei R³ unabhängig ausgewählt ist aus einem substituierten oder unsubstituierten Kohlenwasserstoffrest mit 3 bis 45 C-Atomen, insbesondere mit 7 bis 45 C-Atomen, bevorzugt 7 bis 26 C-Atome, besonders bevorzugt 7 bis 21 C-Atome, oder besser 8 bis 18 C-Atome.

Vorzugsweise werden die verschiedenen organischen Säuren der Formel IV etwa äquimolar eingesetzt, wobei die Umsetzung gegebenenfalls in Gegenwart eines inerten Lösemittels erfolgt, das nach der Umsetzung im Wesentlichen entfernt wird. Die verschiedenen Säuren der Formel IV können äquimolar zueinander eingesetzt werden, also etwa 1:1 bei zwei verschiedenen bzw. unterschiedlichen Säuren der Formel IV" oder auch im Verhältnis von 50 :1 bis 1: 50 jeweils für die verschiedenen, eingesetzten Säuren, unabhängig davon, ob zwei, drei, vier, fünf oder sechs oder noch mehr verschiedene Säuren der Formel IV eingesetzt werden. Bevorzugt werden die verschiedenen Säuren annähernd äquimolar zu einander eingesetzt, also bei drei verschiedenen Säuren der Formel IV etwa 1:1:1, bei vier verschiedenen Säuren der Formel IV etwa 1:1:1:1. Generell weiß der Fachmann, dass die molaren Verhältnisse der verschiedenen organischen Säuren untereinander frei gewählt werden können, wobei insgesamt eine carboxyfunktionalisierte Silicium enthaltende Vorläuferverbindung mit mindestens zwei mit unterschiedlichen Kohlenwasserstoffresten funktionalisierten Carboxy-Gruppen der Formel I oder II erhalten wird.

Soll bevorzugt eine Verbindung der Formel II hergestellt werden, wird bei höheren Temperaturen und unter Zusatz von Wasserspuren gearbeitet und die Reaktionszeiten werden verlängert.

Vorzugsweise erfolgt die Umsetzung in einem inerten Lösemittel, insbesondere einem organischen inerten Lösemittel in dem die Verbindungen der Formel III, IV, I und/oder II löslich sind, bevorzugt sind nur die Edukte III und IV darin löslich. Bevorzugte Lösemittel sind Kohlenwasserstoffe, Halogenkohlenwasserstoffe oder Ether, bevorzugt werden aromatische Kohlenwasserstoffe, wie Toluol eingesetzt. Generell sind dem Fachmann auch weitere übliche inerte, insbesondere Kohlenwasserstoff basierte, Lösemittel bekannt. Ihre Eignung hängt zudem davon ab, ob sie in einem Temperaturbereich von den Produkten abgetrennt werden können, der zu keiner wesentlichen Reaktion mit den Ausgangsstoffen oder zu keiner wesentlichen Zersetzung der Produkte der Formel I oder II führt.

Gegenstand der Erfindung ist auch ein Verfahren, insbesondere zur Herstellung einer carboxyfunktionalisierten Silicium enthaltenden Vorläuferverbindung der Formel I und/oder II, bevorzugt zur Herstellung einer Zusammensetzung umfassend mindestens eine carboxyfunktionalisierte Silicium enthaltende Vorläuferverbindung einer organischen Säure mit mindestens zwei, bevorzugt mit drei oder vier, mit verschiedenen Kohlenwasserstoffresten funktionalisierte Carboxy-Gruppen, insbesondere der Formel I und/oder II,
indem ein Halogensilan der Formel III

(A)_{z}SiR²ₓ(Hal)_{4-(z+x)} (III)

- mit z gleich 0, 1 oder 2, x gleich 0, 1 oder 2 und (z+x) kleiner gleich (≤) 2,
- A unabhängig eine unsubstituierte oder substituierte Kohlenwasserstoff- Gruppe, insbesondere einer unsubstituierten oder substituierten linearen, verzweigten und/oder cyclischen Alkyl-, Alkenyl-, Cycloalkenyl-alkylenmit 1 bis 8 C-Atomen in der bivalenten Alkylen-Gruppe, Alkylaryl-, Arylalkylen-, Aryl-, wie Phenyl; Methacryloxyalkyl- und/oder Acryloxyalkxly-Gruppe,
- R² unabhängig voneinander eine unsubstituierte lineare, verzweigte oder cyclische Alkyl-Gruppe mit 1 bis 24 C-Atomen oder Aryl-Gruppe und
- Hal jeweils unabhängig eine Halogen-Gruppe ausgewählt aus Chlor oder Brom sind,
   mit mindestens zwei verschiedenen organischen Säuren der Formel IV, d.h. verschiedenen Formeln IV umfassend IVa, IVb, IVc und/oder IVd, umgesetzt wird,
- wobei in den verschiedenen organischen Säuren der Formel IV

   HOR¹ (IV)
- R¹ (R¹ = R^{1a, 1b, 1c und/oder 1d}) unabhängig voneinander einer Carbonyl-R³ Gruppe entspricht (R³ = R^{3a, 3b, 3c und/oder 3d}), wobei R³ unabhängig ausgewählt ist aus einem substituierten oder unsubstituierten Kohlenwasserstoffrest mit 3 bis 45 C-Atomen, insbesondere mit 7 bis 45 C-Atomen, bevorzugt 7 bis 26 C-Atome,
und die organischen Säuren gegebenenfalls mindestens im molaren stöchiometrischen Verhältnis zu den Halogen-Gruppen der Formel III vorliegen, gegebenenfalls in Gegenwart eines inerten Lösemittels.

Besonders bevorzugt werden die vorgenannten organischen Carbonsäuren, insbesondere die natürlich vorkommenden oder synthetischen Fettsäuren, insbesondere die gesättigten und/oder ungesättigten Fettsäuren als organische Säuren der Formel IV in das erfindungsgemäße Verfahren eingesetzt. Insbesondere kann dies eine Auswahl aus Caprinsäure, Caprylsäure, Stearinsäure, Palmitinsäure, Ölsäure, Laurinsäure, Myristinsäure und Behensäure sein.

Besonders bevorzugt werden in dem erfindungsgemäßen Verfahren die verschiedenen organischen Säuren der Formel IV untereinander im Verhältnis von 10 : 1 bis 1 : 10 eingesetzt, bevorzugt werden die verschiedenen Säuren der Formel IV untereinander etwa äquimolar eingesetzt und insbesondere werden die verschiedenen Säuren der Formel IV in Bezug auf die Halogen-Gruppen der Formel I mindestens etwa äquimolar eingesetzt.

Entsprechend einer bevorzugten Ausführungsform ist es bevorzugt, wenn ein Halogensilan der Formel III mit
(v) z gleich 1 und x gleich 0 und A einer unsubstituierten oder substituierten Kohlenwasserstoff-Gruppe entsprechen, insbesondere eine Alkyl-, Alkenyl-, Cyclohexenyl-alkylenmit 1 bis 8 C-Atomen in der bivalenten Alkylen-Gruppe, Alkylaryl-, Arylalkylen-, Aryl-, wie Phenyl-; Methacryloxyalkyl- und/oder Acryloxyalkxly-Gruppe,
mit zwei oder drei verschiedenen organischen Säuren der Formel IV mindestens im molaren stöchiometrischen Verhältnis in Bezug auf die Halogen-Gruppen der Formel III oder, mit (vi) z gleich 0 und x gleich 0 sind mit zwei, drei oder vier verschiedenen organischen Säuren der Formel IV mindestens im molaren stöchiometrischen Verhältnis in Bezug auf die Halogen-Gruppen der Formel III
umgesetzt werden,
- wobei in den verschiedenen organischen Säuren der Formel IV

   HOR¹ (IV)
- R¹ unabhängig voneinander einer Carbonyl-R³ Gruppe entspricht, wobei R³ unabhängig ausgewählt ist aus einem substituierten oder unsubstituierten Kohlenwasserstoffrest mit 3 bis 45 C-Atomen, insbesondere mit 7 bis 45 C-Atomen, bevorzugt 7 bis 26 C-Atomen, weiter bevorzugt 8 bis 18 C-Atome, insbesondere 8 bis 16 C-Atome, ist.

Bevorzugte Beispiele für A-Gruppen sind H₃C(CH₂)₂-, (H₉C₄)-, (H₁₇C₈)-, (H₃₃C₁₆)-, H₂C=CH₂-, ClCH₂(CH₂)₂-, C₆H₉-(CH₂)₂-, insbesondere 3-C₆H₉-(CH₂)₂-, 2-C₆H₉-(CH₂)₂-, 1-C₆H₉-(CH₂)₂-, C₆H₈-(CH₂)₂-, 1,3-C₆H₈-(CH₂)₂- oder 2,4-C₆H₈-(CH₂)₂-, insbesondere Cyclohex-3-enyl-2-ethylen- sowie Isomere, wie Cyclohex-2-enyl-2-ethylen- oder Cyclohex-1-enyl-2-ethylen- und Mischungen dieser oder auch Cyclohexadienyl-alkylen-Gruppen mit 1 bis 16 C-Atomen, insbesondere eine Cyclohexadienyl-ethylen-Gruppe.

Besonders bevorzugt werden zwei, drei oder vier oder mehr der vorgenannten gesättigten Fettsäuren und/oder ungesättigten Fettsäuren der allgemeinen Formel IV, insbesondere umfassend IVa (R^{1a}OH), IVb (R^{1b}OH), IVc (R^{1c}OH) und/oder IVd (R^{1d}OH) mit einem Halogensilan der Formel III umgesetzt. Vorzugsweise werden drei oder vier verschiedene Fettsäuren der Formel IV, zu jeweils 1 mol, mit 1 mol Trichlorsilan oder 1 mol Tetrachlorsilan der Formel III, vorzugsweise in einem inerten Lösemittel, umgesetzt.

Bevorzugte Halogensilane sind Propyltrichlorsilan, Cyclohex-3-enyl-2-ethylen-trichlorsilan, Cyclohex-2-enyl-2-ethylen-trichlorsilan, Cyclohex-1-enyl-2-ethylen-trichlorsilan, Chlor-3-propyl-trichlorsilan, Vinyltrichlorsilan, Allytrichlorsilan, Tetrachlorsilan, n-/iso-/tert-Butyltrichlorsilan, Octyltrichlorsilan, n-/iso-Hexadecyltrichlorsilan.

Weiter bevorzugt wird das Verfahren so durchgeführt, dass zusätzlich oder alternativ zu den vorgenannten Merkmalen, eine Verbindung der allgemeinen Formel III
(v) mit z gleich 1 und A gleich Alkyl-, wie H₃C(CH₂)₂-, n-/iso-(H₃₃C₁₆), (H₁₇C₈)-, (H₉C₄) -, Alkenyl-, wie H₂C=CH₂-, Halogenalkyl-, wie ClCH₂(CH₂)₂-, C₆H₉- (CH₂)₂-, insbesondere 3-C₆H₉- (CH₂)₂-, 2-C₆H₉-(CH₂)₂-, 1-C₆H₉-(CH₂)₂-, C₆H₈-(CH₂)₂-, 1,3-C₆H₈-(CH₂)₂- oder 2,4-C₆H₈-(CH₂)₂-, mit Hal gleich Brom oder Chlor, vorzugsweise ist Hal = Cl, mit mindestens zwei oder drei verschiedenen organischen Säuren der Formel IV umgesetzt wird, wobei R¹, umfassend R^{1a bis 1c und/oder 1d}, unabhängig ausgewählt ist aus -COC₇H₁₅, -COC₉H₁₉, -COC₁₁H₂₃, -COC₁₃H₂₇, - COC₁₅H₃₁, -COC₁₇H₃₅ und -COC₂₁H₄₃, oder
(vi) mit z gleich 0 mit mindestens zwei, drei oder vier verschiedenen organischen Säuren der Formel IV umgesetzt wird, wobei R¹, umfassend R^{1a bis 1c und/oder 1d}, unabhängig ausgewählt ist aus - COC₇H₁₅, -COC₉H₁₉, -COC₁₁H₂₃, -COC₁₃H₂₇, -COC₁₅H₃₁, -COC₁₇H₃₅ und -C₂₁H₄₃.

Die vorgenannte Umsetzung erfolgt vorzugsweise mit einer mindestens äquimolaren

Mischung der verschiedenen Säuren der Formel IV in Bezug auf die Halogen-Gruppen des eingesetzten Halogensilan der Formel III.

Generell sind die organischen Säuren mit längeren hydrophoben Kohlenwasserstoffresten, wie vorstehend genannt, beginnend mit der Valerinsäure, bevorzugt Caprinsäure, Laurinsäure und/oder Myristinsäure, gut zur Herstellung von Silanolkondensationskatalysatoren und als Silanolkondensationskatalysator geeignet. Die weniger hydrophoben Säuren, wie Propionsäure, Essigsäure, Ameisensäure sind für die Umsetzung mit thermoplastischen hydrophoben Polymeren nur als zweckmäßig einzustufen. Entsprechend sind auch die geruchsintensiven Fettsäuren, wie Buttersäure und Caprylsäure aufgrund des stechenden Geruchs nur zweckmäßig oder wenig geeignet bis ungeeignet in einer Zusammensetzung, Masterbatch oder einem erfindungsgemäßen Verfahren eingesetzt zu werden. Dies gilt insbesondere, wenn die herzustellenden Polymere oder Polymercompounds zur Herstellung von Trinkwasserrohren weiterverwendet werden sollen.

Als organische Säuren werden Carbonsäuren verstanden, die keine Sulfat- oder Sulphonsäure-Gruppen aufweisen, insbesondere sind es organische Säuren entsprechend R³-COOH.

Weitere zweckmäßige Säuren aus denen die Vorläuferverbindungen der Formel I und/oder II mit R³-COO- bzw. R¹O- hergestellt werden können sind vorstehend beschrieben, unter Glutarsäure etc.

Die Silicium enthaltende Vorläuferverbindung verschiedener organischer Säuren kann auf Trägermaterialien oder Füllstoffe aufgebracht werden, die eingangs detailliert beschrieben sind. Verfahrenstechnisch kann diese durch Schmelzen oder Lösen in einem inerten Lösemittel und Zugabe der Trägermaterialien oder Füllstoffe erfolgen oder nach dem Fachmann an sich bekannten Verfahren.

Zusätzlich oder alternativ zu den vorgenannten Verfahrensmerkmalen kann daher die hergestellte Zusammensetzung einer Silicium enthaltenden Vorläuferverbindung einer organischen Säure der Formel I und/oder II auf ein Trägermaterial, einen Füllstoff aufgebracht, eingelagert und/oder eingekapselt werden.

Ein weiterer Gegenstand der Erfindung ist die Verwendung einer Verbindung der Formel I und/oder II, einer Zusammensetzung einer Verbindung der Formeln I und/oder II oder einer Mischung dieser,
- als, insbesondere Katalysatorvorläuferverbindung, bevorzugt als Silanhydrolysekatalysator und/oder als Silanolkondensationskatalysator,
- bei der Herstellung eines Silicium enthaltenden Polymers, Polymercompounds, eines ungefüllten vernetzten Polymers und/oder eines gefüllten vernetzten Polymers,
- in einem Monosil-, Sioplas- und/oder Co-Polymerisationsverfahren, insbesondere in einem Monosil-Verfahren oder Sioplas-Verfahren mit thermoplastischen Basispolymeren oder in einem Co-Polymerisationsverfahren mit Monomeren und/oder Prepolymeren von thermoplastischen Basispolymeren in Gegenwart mindestens eines Radikalbildners;
- zur Herstellung von ungefüllten Si-vernetzten, und/oder zur Herstellung von gefüllten Si-vernetzten Polymercompounds; und/oder entsprechend gefüllten Si-vernetzten oder ungefüllten Si-vernetzten Polymeren basierend auf thermoplastischen Basispolymeren, die gefüllten Polymere umfassen vorzugsweise als Füllstoffe mineralische Partikel und/oder Fasern, wie Glasfasern, Kieselsäuren, Aluminiumhydroxid, Magnesiumhydroxid sowie weitere dem Fachmann geläufige Füllstoffe.

Ein weiterer Gegenstand der Erfindung ist auch die Verwendung einer Verbindung der Formel I und/oder II, einer Zusammensetzung einer Verbindung der Formeln I und/oder II oder einer Mischung dieser,
- in Gegenwart eines thermoplastischen Basispolymers, eines silangepfropften Basispolymers, eines silan-co-polymerisierten Basispolymers und/oder in Gegenwart eines Monomers und/oder Prepolymers dieser Basispolymere und/oder Mischungen dieser, oder die Verwendung
- zusammen mit einer organofunktionellen Silan-Verbindung, insbesondere der Formel V wie nachstehend definiert, oder
- zusammen mit anderen Silanolkondensationskatalysatoren, insbesondere umfassend Dibutylzinndilaurat, Dioctylzinndilaurat, Dioctylzinndi-(2-ethylhexanoat), Dioctylzinndi-(isooctyl mercaptoacetat), Dibutylzinndicarboxylat, Mono-butylzinntris-(2-ethylhexanoat), Dibutylzinndineodecanoat, Laurylstannoxan, Dibutylzinndiketonoat, Dioctylzinnoxid, Dibutylzinndiacetat, Dibutylzinnmaleat, Dibutylzinndichlorid, Dibutylzinnsulfid, Dibutylzinnoxid, Organozinnoxide, Monobutylzinndihydroxychlorid, Monobutylzinnoxide, Dibutylzinnbis-(isooctyl maleat), oder
- bei der Herstellung von Artikeln, insbesondere Formkörpern, bevorzugt von Kabeln oder Rohren.

Gemäß einer besonders bevorzugten Ausführungsvariante erfolgt die Verwendung einer Verbindung der Formel I und/oder II, einer Zusammensetzung einer Verbindung der Formeln I und/oder II oder einer Mischung dieser, zusammen mit einer organofunktionellen Silan-Verbindung, insbesondere zusammen mit einem mit einer ungesättigten Gruppe funktionalisierten Alkoxysilan der allgemeinen Formel V,

(B)_{b}SiR⁴_{c}(OR⁵)_{3-d-c} (V)

- wobei unabhängig voneinander d gleich 0, 1, 2 oder 3 und c gleich 0, 1, 2 oder 3 ist, mit der Maßgabe, dass in Formel V c+d kleiner gleich (≤ 3 ist,
- mit B unabhängig voneinander für eine einwertige Gruppe in Formel V, insbesondere eine ungesättigte KohlenwasserstoffGruppe, vorzugsweise (R7)₂C=C(R⁷)-E_{q}-, worin R⁷ gleich oder verschieden sind und R⁷ einWasserstoffatom oder eine Methylgruppe oder eine Phenylgruppe ist, die Gruppe E eine Gruppe aus der Reihe -CH₂-, -(CH₂)₂₋, -(CH₂)₃-_{,} -O(O)C(CH₂)₃-oder -C(O)O-(CH₂)₃- darstellt, q gleich 0 oder 1 ist, oder Isoprenyl, Hexenyl, Clyclohexenyl, Terpenyl, Squalanyl, Squalenyl, Polyterpenyl, Betulaprenoxy, cis/trans-Polyisoprenyl, oder einer Gruppe R⁶-Dₚ-[C(R₆)=C(R⁶)-C(R⁶)=C(R⁶)]ₜ-Dₚ- entspricht, worin R⁶ gleich oder verschieden sind und R⁶ ein Wasserstoffatom oder eine Alkylgruppe mit 1 bis 3 C-Atomen oder eine Arylgruppe oder eine Aralkylgruppe, vorzugsweise eine Methylgruppe oder eine Phenylgruppe, bedeutet, Gruppen D gleich oder verschieden sind und D eine Gruppe aus der Reihe -CH₂-, -(CH₂)₂-, -(CH₂)₃-, -O(O)C(CH₂)₃-oder - C(O)O-(CH₂)₃- darstellt und p gleich 0 oder 1 und t gleich 1 oder 2 ist, besonders bevorzugt eine Vinyl-Gruppe;
- R⁵ ist unabhängig voneinander Methyl, Ethyl, n-Propyl und/oder iso-Propyl;
- R⁴ ist unabhängig voneinander eine substituierte oder unsubstituierte Kohlenwasserstoff-Gruppe, insbesondere eine Alkyl-Gruppe mit 1 bis 16 C-Atomen oder eine Aryl-Gruppe.

Gleichfalls Gegenstand der Erfindung ist eine Formulierung umfassend die erfindungsgemäße Zusammensetzung, insbesondere ein Masterbatch enthaltend eine Zusammensetzung oder eine Verbindung der Formel I oder II nach einem der Ansprüche 1 bis 16, insbesondere zur Vernetzung von thermoplastischen Basispolymeren, der mindestens eine Silicium enthaltende Vorläuferverbindung einer organischen Säure der Formel I und/oder der Formel II und ein thermoplastisches Basispolymer, ein silangepfropftes Basispolymer, ein silan-co-polymerisiertes Basispolymer, ein Monomer dieser Basispolymere, ein Prepolymer dieser Basispolymere und/oder Mischungen dieser, und gegebenenfalls einen Radikalbildner umfasst.

Als thermoplastische Basispolymere im Sinne der Erfindung werden die folgenden Verbindungen angesehen: ein silangepfropftes Basispolymer, ein silan-co-polymerisiertes Basispolymer und/oder Monomer und/oder Prepolymer dieser Basispolymere, oder auch Silan-Block-Co-Preplomere oder Block-co-Prepolymere und/oder Mischungen dieser umfassen. Vorzugsweise ist das thermoplastische Basispolymer ein unpolares Polyolefin, wie Polyethylen, Polypropylen oder ein Polyvinylchlorid oder ein silangepfropftes Polyolefin und/oder silan-co-polymerisiertes Polyolefin und/oder ein Co-Polymer aus einem oder mehreren Olefinen und einem oder mehreren Co-Monomeren, die polare Gruppen enthalten. Das thermoplastische Basispolymer kann auch teilweise oder vollständig als Trägermaterial fungieren, beispielsweise in einem Masterbatch umfassend als Trägermaterial ein thermoplastisches Basispolymer oder ein Polymer und die Silicium enthaltende Vorläuferverbindung einer organischen Säure der Formel I und/oder II und gegebenenfalls eine organofunktionelle Silanverbindung, insbesondere der Formel V.

Bevorzugte thermoplastische Basispolymere der Erfindung sind, insbesondere Acrylnitril-Butadien-Styrol (ABS), Polyamide (PA), Polymethylmethacrylat (PMMA), Polycarbonat (PC), Polyethylen (PE), Polypropylen (PP), Polystyrol (PS), Polyvinylchlorid (PVC) sowie die auf Ethylen-Einheiten basierenden Polymere Ethylen-Vinylacetat-Copolymere (EVA), EPDM oder EPM und/oder Celluloid oder silan-co-polymerisierte Polymere verstanden und als Monomere und/oder Prepolymere Vorläuferverbindungen dieser Basispolymere, wie Ethylen, Propylen. Weitere thermoplastische Basispolymere sind nachfolgend genannt.

Beispiele für silan-co-polymerisierte thermoplastische Basispolymere sind auch Ethylen-Silan Co-Polymere, beispielsweise Ethylen-Vinyltrimethoxysilan Co-Polymer, Ethylen-Vinyltriethoxysilan Co-Polymer, Ethylen-dimethoxyethoxysilan Co-Polymer, Ethylen-gamma-trimethoxysilan Co-Polymer, Ethylen-gamma-(meth)acryloxypropyltriethoxysilan Co-Polymer, Ethylen-gamma-acryloxypropyltriethoxysilan Co-Polymer, Ethylen-gamma-(meth)acryloxypropyltrimethoxysilan Co-Polymer, Ethylen-gamma-acryloxypropyltrimethoxysilan Co-Polymer und/oder Ethylen-triacetoxysilan Co-Polymer.

Als unpolare thermoplastische Basispolymere können Thermoplaste wie, insbesondere ein reiner PE-Typ verwendet werden, beispielsweise PE-LD, PE-LLD, PE-HD, m-PE. Polare Gruppen tragende Basispolymere ergeben z. B. ein verbessertes Brandverhalten, d. h. geringere Entflammbarkeit und Rauchgasdichte, und erhöhen das Füllstoffaufnahmevermögen. Polare Gruppen sind z. B. Hydroxyl-, Nitril-, Carbonyl-, Carboxyl-, Acyl-, Acyloxy-, Carboalkoxygruppen oder Aminogruppen sowie Halogenatome, insbesondere Chloratome. Nicht polar sind olefinische Doppelbindungen oder C-C-Dreifachbindungen. Geeignete Polymere sind neben Polyvinylchlorid Co-Polymere aus einem oder mehreren Olefinen und einem oder mehreren Co-Monomeren, die polare Gruppen enthalten, z. B. Vinylacetat, Vinylpropionat, (Meth)acrylsäure, (Meth)-acrylsäuremethylester, (Meth)acrylsäureethylester, (Meth)-acrylsäurebutylester, Acrylnitril. In den Copolymeren finden sich die polaren Gruppen, beispielsweise in Mengen von 0,1 bis 50 Mol-%, vorzugsweise von 5 bis 30 Mol-%, bezogen auf die Polyolefinbausteine. Besonders geeignete Basispolymere sind Ethylen-Vinylacetat-Copolymere (EVA). Beispielsweise enthält ein geeignetes handelsübliches Copolymer 19 Mol-% Vinylacetatund 81 Mol-% Ethylenbausteine.

Besonders geeignete Basispolymere sind Polyethylen, Polypropylen, sowie entsprechend silanmodifizierte Polymere. Die silan-gepfropften Polymere können mit Füllstoffen gefüllt oder ungefüllt vorliegen und gegebenenfalls nach einer Formgebung, feuchtigkeitsvernetzt werden.

Die erfindungsgemäße Zusammensetzung oder der Masterbatch eignen sich als Zusatz in einem Monosil-, Sioplas- und/oder in einem Co-Polymerisationsprozess bzw. -verfahren. Besonders geeignet wird der Silanhydrolyse- und/oder Silanolkondensationskatalysator der allgemeinen Formel I und/oder II erst wirksam, wenn zusätzlich Feuchte zugesetzt wird. Daher findet die endgültige Vernetzung des ungefüllten oder gefüllten Polymers im Allgemeinen nach bekannter Art im Wasserbad, im Dampfbad, oder aber durch Luftfeuchtigkeit bei Umgebungstemperaturen (so genanntes "ambient curing") statt.

Der Masterbatch kann als weitere Komponente einen Stabilisator und/oder weitere Zusatzstoffe und/oder Mischungen dieser enthalten.

Gegenstand der Erfindung ist auch eine Silicium enthaltende Vorläuferverbindung der allgemeinen Formel I und/oder II, insbesondere gemäß der Definition nach einem der Ansprüche 1 bis 9 oder 13 bis 16.

Die folgenden Beispiele erläutern die erfindungsgemäßen Zusammensetzungen, den Masterbatch und die erfindungsgemäßen Verfahren näher, ohne die Erfindung auf diese Beispiele zu beschränken.

### Bestimmungsmethoden:

Hydrolysierbares Chlorid (Chlorid) wurde potentiographisch mit Silbernitrat titriert (beispielsweise Metrohm, Typ 682 Silberstab als Indikatorelektrode und Ag/AgCl-Referenzelektrode oder andere geeignete Referenzelektrode). Gesamtchloridgehalt nach dem Wurtzschmitt-Aufschluss. Dazu wird die Probe in einer Wurtzschmittbombe mit Natriumperoxid aufgeschlossen. Nach Ansäuern mit Salpetersäure wird Chlorid potentiographisch mit Silbernitrat gemessen, wie vorstehend.
Allgemeine Herstellungsmethoden:
   A) Herstellung von mit verschiedenen Kohlenwasserstoffresten funktionalisierten Carbonyl-Gruppen aufweisenden Carboxysilanen, wie Halogenalkyl-, Alkyl-, Alkenyltricarboxylsilan, die nachfolgend auch als A-Tricarboxysilan bezeichnet werden oder Tetracarboxysilan .
Allgemeine Beispiele:
   a) Zur Herstellung von A-Tricarboxysilanen (Formel I mit z = 1) wird 1 mol eines A-Trichlorsilans, bzw. allgemein ein A-Trihalogensilan, mit 3 mol oder einem Überschuss zwei oder drei verschiedener organischen mono-Carbonsäure der Formel IV ausgewählt aus R^{1a}OH, R^{1b}OH und R^{1c}OH direkt umgesetzt oder in einem inerten Lösemittel, insbesondere bei erhöhter Temperatur, umgesetzt. Vorzugsweise werden 1 mol A-Trichlorsilan mit einer Mischung aus 1 mol einer ersten organischen mono-Carbonsäure (R^{1a}OH), 1 mol einer zweiten organischen mono-Carbonsäure (R^{1b}OH) und 1 mol einer dritten organischen mono-Carbonsäure (R^{1c}OH) umgesetzt. Bei Umsetzung mit nur zwei verschiedenen mono-Carbonsäuren können diese im Verhältnis von 1:2 bis 2:1, bevorzugt 1:1, d.h. je zu 1,5 mol eingesetzt werden. Bevorzugt erfolgt die Umsetzung bei erhöhter Temperatur, beispielsweise bis zur Siedetemperatur des Lösemittels oder um die Schmelztemperatur der organischen Fettsäure bzw. der organischen Säure.
   b) Zur Herstellung von Tetracarboxysilanen wird 1 mol Tetrahalogensilan, insbesondere Tetrachlorsilan oder Tetrabromsilan, mit 4 mol oder einem Überschuss zwei, insbesondere drei oder vier verschiedener mono-Carbonsäuren der Formel IV ausgewählt aus R^{1a}OH, R^{1b}OH, R^{1c}OH und R^{1d}OH, beispielsweise verschiedenen Fettsäuren oder einer Fettsäuremischung dieser Fettsäuren umgesetzt. Die Umsetzung kann direkt durch Aufschmelzen oder in einem inerten Lösemittel, vorzugsweise bei erhöhter Temperatur, erfolgen.
Durchführung
Herstellung, Charakterisierung folgender Carboxysilane aus TCS, VTC und STC mit
   - 3 (bzw. 4) verschiedenen, langkettigen Carbonsäuren im Hinblick auf den Aggregatzustand (fest, Wachs, flüssig)

### Beispiel 1: Herstellung von Vinylcarboxysilanen Beispiel 1.1: Vinylcarboxysilan aus Laurin-, Myristin- und Caprylsäure

**Tabelle 1: Übersicht**

| | | **A-/R^{3a-c}** | | **A-/R^{1a-c}** |
|---|---|---|---|---|
| Vinyltrichlorsilan (VTC) | A | **H₂C = CH** | A | **H₂C = CH** |
| Caprylsäure | R3^{a} | C₇H₁₅ | R^{1a} | -(CO)C₇H₁₅ |
| Laurinsäure | R3^{b} | C₁₁H₂₃ | R^{1b} | -(CO)C₁₁H₂₃ |
| Myristinsäure | R3^{c} | C₁₃H₂₇ | R^{1c} | -(CO)C₁₃H₂₇ |

### Durchführung: Synthese mit drei verschiedener Fettsäuren (=< C14) mit Vinyltrichlorsilan (VTC); Versuchsansatz: 200g

(Kettenlänge R¹ der Fettsäuren R^{1a-c} = C8, C12, C14)

**Tabelle 2: Edukte**

| Edukte | m(Ist) [g] | Stoffmenge [mol] | Molmasse [g/mol] |
|---|---|---|---|
| Vinyltrichlorsilan | 44,0 | 1 | 161,49 |
| Laurinsäure | 54,4 | 1 | 200,3 |
| Myristinsäure | 62,2 | 1 | 228,4 |
| Caprylsäure (flüssig) | 39,3 | 1 | 144,2 |
| Toluol | 101,2 | | 92,14 |

**Tabelle 3: Produkt (soll)**

| Produkt | Molmasse | Mol | Masse (%) | Masse (soll) |
|---|---|---|---|---|
| Carboxysilan | 624,5 | 1 | 85,1% | 170,2 |
| HCl | 36,5 | 3 | 14,9% | 29,8 |

### Synthese

Die genannten Fettsäuren wurden mit 100g Toluol in den Reaktionskolben vorgelegt, vermischt und auf circa 60°C erwärmt. Mittels Tropftrichter wurde innerhalb 15 min Vinyltrichlorsilan zugetropft. Es ist ein leichter Temperaturanstieg zu beobachten. Nach der Zugabe wird 15 min. nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt wurde HCl neutralisiert. Es wurde 3,5 Stunden nachgerührt.

### Destillation

Das Ölbad wurde auf 80°c erwärmt. Es wurde am Rotationsverdampfer bei einem Druck von < 1mbar in eine Kühlfalle (Trockeneis und Isopropanol, ca. -80°C) abgezogen. Anschließend wird 1h nachgerührt.

Das erhaltene Produkt ist flüssig, leicht viskos, leicht gelb. Toluol wurde überwiegend am Rotationsverdampfer entfernt.
**Auswaage:** Carboxysilan: 169,9g (Ausbeute 99,82%)

### NMR Analyse des Carboxysilan

Die 1H- und 13C-NMR-Spektren zeigen das Umsetzungsprodukt aus Vinyltrichlorsilan mit den verschiedenen Fettsäuren. Es sind Anteile überschüssiger freier Säure enthalten. (ca. 8 mol%).
²⁹Si-NMR-Spektrum
ca. 4,7% Si im Bereich Silan
ca. 84,0 %Si im Bereich Vinyltricarboxysilan
ca. 11,3 %Si M-Strukturen abgeleitet aus Vinyltricarboxysilan

**Chloridbestimmung:** Von dem hergestellten Carboxysilan wurde außerdem eine Chloridbestimmung durchgeführt.

**Tabelle 4: Chloridbestimmung**

| **Bestimmung** | **Ergebnis** | **Einheit** |
|---|---|---|
| Chlorid | 0,39 | % (Masse) |
| Gesamtchlorid | 0,46 | % (Masse) |

### Löslichkeitsuntersuchung in Lösungsmittel:

**Tabelle 5: Löslichkeit**

| Löslichkeit | in Vinyltrimethoxysilan |
|---|---|
| Carboxysilan | > 50% |

Es wurde ein flüssiges, leicht gelb und leicht viskoses Vinylcarboxysilan der drei verschiedenen Fettsäuren hergestellt.

### Beispiel 1.2: Vinylcarboxysilan aus Myristin-, Palmitin- und Stearinsäure

**Tabelle 6: Übersicht**

| | | **A-/R^{3a-c}-** | | **A-/R^{1a-c}-** |
|---|---|---|---|---|
| Vinyltrichlorsilan (VTC) | A | **H₂C = CH** | A | **H₂C = CH** |
| Myristinsäure | R^{3a} | C₁₃H₂₇ | R^{1a} | -(CO)C₁₃H₂₇ |
| Palmitinsäure | R^{3b} | C₁₅H₃₁ | R^{1b} | -(CO)C₁₅H₃₁ |
| Stearinsäure | R^{3c} | C₁₇H₃₅ | R^{1c} | -(CO)C₁₇H₃₅ |

### Durchführung:

Herstellung von Vinyltricarboxysilan mit einer Mischung von drei verschiedenen Fettsäuren (>= C14) mit Vinytrichlorsilan (VTC); Versuchsansatz: 200g

(Kettenlänge R¹ der Fettsäuren R^{1a-c} = C14, C16, C18)

**Tabelle 7: Edukte I**

| **Edukte** | **m(Ist) [g]** | **Stoffmenge [mol]** | **Molmasse [g/mol]** |
|---|---|---|---|
| VTC | 34,7 | 1 | 161,49 |
| Stearinsäure | 61,1 | 1 | 284,5 |
| Myristinsäure | 49,1 | 1 | 228,4 |
| Palmitinsäure | 55,1 | 1 | 256,4 |
| Toluol | 101,0 | | 92,14 |

**Tabelle 8: Produkt (soll)**

| **Produkt** | **Molmasse** | **Mol** | **Masse (%)** | **Masse (soll)** |
|---|---|---|---|---|
| **Carboxysilan** | 820,9 | 1 | 88,2% | 176,5 |
| **HCl** | 36,5 | 3 | 11,8% | 23,5 |

### Synthese

Die drei Fettsäuren wurden mit 100g Toluol in den Reaktionskolben vorgelegt, vermischt und auf ca.60°C erwärmt. Mittels Tropftrichter wurde innerhalb 15 min Vinyltrichlosilan zugetropft. Es war ein leichter Temperaturanstieg zu beobachten. Nach der Zugabe wird 15 min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt wurde HCl neutralisiert. Es wurde 3,5 Stunden nachgerührt.

### Destillation

Bei einer Ölbadtemperatur von 85°C wurden am Rotationsverdampfer (Druck auf < 1mbar; Kühlfalle, mit Trockeneis und Isopropanol auf ca. -80°C) flüchtige Bestandteile abgezogen-. Anschließend wurde 1h nachgerührt. Erhalten wurde ein weißes festes Produkt. In der Kühlfalle wurde 97,5 % des Toluols aufgefangen.
**Auswaage:** Carboxysilan: 174,3g (Ausbeute 99,75 %),

### NMR Analyse des Carboxysilan

Die ¹H- und ¹³C-NMR-Spektren zeigen das Umsetzungsprodukt aus Vinyltrichlorsilan mit den Fettsäuren. Es sind Anteile überschüssiger freier Säure enthalten. (ca. 10 mol%).
²⁹Si-NMR-Spektrum
ca. 2% Si im Bereich Silan
ca. 82,1 %Si im Bereich Vinyltricarboxysilan
ca. 15,8 %Si M-Strukturen abgeleitet aus Vinyltricarboxysilan

**Chloridbestimmung:** Von dem hergestellten Carboxysilan wurde außerdem eine Chloridbestimmung durchgeführt.

**Tabelle 9: Chloridbestimmung**

| **Bestimmung** | **Ergebnis** | **Einheit** |
|---|---|---|
| Gesamtchlorid | < 0,1 | % (Masse) |

**Löslichkeitsuntersuchung in Lösungsmittel:**

**Tabelle 10: Löslichkeit**

| Löslichkeit | Vinyltrimethoxysilan (VTMO) |
|---|---|
| Carboxysilan | < 1,0% |

Es wurde ein festes, weißes Vinylcarboxysilan mit der drei verschiedenen Fettsäuren hergestellt.

### Beispiel 2: Herstellung von Vinylcarboxysilanen mit Propyltrichlorsilan (PTCS) Beispiel 2.1: Herstellung von Propyltricarboxysilan

**Tabelle 11: Übersicht**

| | | **A-/R**^{3a-c}**-** | | **A-/R**^{1a-c}**-** |
|---|---|---|---|---|
| Vinyltrichlorsilan (VTC) | A | C₃H₇ | A | -(CO)C₃H₇ |
| Caprylsäure | R^{3a} | C₇H₁₅ | R^{1a} | - (CO) C₇H₁₅ |
| Laurinsäure | R^{3b} | C₁₁H₂₃ | R^{1b} | - (CO) C₁₁H₂₃ |
| Myristinsäure | R^{3c} | C₁₃H₂₇ | R^{1c} | - (CO) C₁₃H₂₇ |

**Durchführung:** Synthese mit drei verschiedenen Fettsäuren (=< C14) mit Propyltrichlorsilan (PTCS); Versuchsansatz: 200g

(Kettenlänge der verschiedenen Fettsäuren R^{1a-c} = C8, C12, C14)

**Tabelle 12: Edukte**

| **Edukte** | **m(Ist) [g]** | **Stoffmenge [mol]** | **Molmasse [g/mol]** |
|---|---|---|---|
| Propyltrichlorsilan (PTCS) | 47,3 | 1 | 177,5 |
| Laurinsäure | 53,4 | 1 | 200,3 |
| Myristinsäure | 60,9 | 1 | 228,4 |
| Caprylsäure (flüssig) | 38,4 | 1 | 144,2 |
| Toluol | 100,0 | | 92,14 |

**Tabelle 13: Produkt (soll)**

| **Produkt** | **Molmasse** | **Mol** | **Masse (%)** | **Masse (soll)** |
|---|---|---|---|---|
| **Propylcarboxysilan** | 641,0 | 1 | 85,4% | 170,8 |
| **HCl** | 36,5 | 3 | 14,6% | 29,2 |

### Synthese

Die Fettsäuren wurden mit 100g Toluol in den Reaktionskolben vorgelegt, vermischt und auf circa 60°C erwärmt. Mittels Tropftrichter wurde innerhalb 15 min Propyltrichlorsilan (PTCS) zugetropft. Es war kein Temperaturanstieg zu beobachten. Nach der Zugabe wurde 15min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt wurde das HCl neutralisiert. Es wurde 3,5 Stunden nachgerührt.

### Destillation

Ein Ölbad eines Rotationsverdampfers wurde auf 85°c erwärmt (Druck auf < 1mbar; Kühlfalle, mit Trockeneis und Isopropanol auf ca. -80°C) und flüchtige Bestandteile abgezogen. Anschließend wurde 1h nachgerührt. Das Toluol konnte zu 98,2 % abdestilliert werden. Erhalten wurde ein flüssiges, leicht viskoses, leicht gelbes Produkt.
**Auswaage:** Carboxysilan: 167,7g (98,13%.)

### NMR Analyse des Carboxysilan

Die ¹H- und ¹³C-NMR-Spektren zeigen das Umsetzungsprodukt aus Propyltrichlorsilan mit den Fettsäuren. Zusätzlich liegen ca. 5 % freie Säure vor.
²⁹Si-NMR-Spektrum
ca. 90,0 %Si im Bereich Tricarboxysilan
ca. 8,1 %Si M-Strukturen
ca. 1,9 %Si Zusatzsignal bei -24 ppm (Silikon)

**Chloridbestimmung:** Von dem hergestellten Carboxysilan wurde außerdem eine Chloridbestimmung durchgeführt.

**Tabelle 14: Chloridbestimmung**

| **Bestimmung** | **Ergebnis** | **Einheit** |
|---|---|---|
| Gesamtchlorid | < 0, 15 | % (Masse) |

### Löslichkeitsuntersuchung in verschiedenen Lösungsmitteln

**Tabelle 15: Löslichkeit**

| Löslichkeit | Vinyltrimethoxysilan (VTMO) |
|---|---|
| Carboxysilan | > 50% |

Es wurde ein flüssiges, leicht gelb, leicht viskoses Propylcarboxysilan der drei verschiedenen Fettsäuren hergestellt.

### Beispiel 2.2: Propyltrichlorsilan mit Myristin-, Palmitin-, und Stearinsäuresäure

**Tabelle 16: Ubersicht**

| | | **A-/R**^{3a-c}- | | **A-/R**^{1a-c}**-** |
|---|---|---|---|---|
| Propyltrichlorsilan (PTCS) | A | C₃H₇ | A | - (CO) C₃H₇ |
| Myristinsäure | R^{3a} | C₁₃H₂₇ | R^{1a} | - (CO) C₁₃H₂₇ |
| Palmitinsäure | R^{3b} | C₁₅H₃₁ | R^{1b} | - (CO) C₁₅H₃₁ |
| Stearinsäure | R^{3c} | C₁₇H₃₅ | R^{1c} | - (CO) C₁₇H₃₅ |

**Durchführung:** Synthese mit verschiedener Fettsäuren (>= C14) mit Propyltrichlosilan (PTCS); Versuchsansatz: 200g

(Kettenlänge der Fettsäuren R^{1a-c}-: C14, C16, C18)

**Tabelle 17:**

| **Edukte** | **m (Ist) [g]** | **Stoffmenge [mol]** | **Molmasse [g/mol]** |
|---|---|---|---|
| Propyltrichlosilan (PTCS) | 37,5 | 1 | 177,5 |
| Stearinsäure | 60,1 | 1 | 284,5 |
| Myristinsäure | 48,2 | 1 | 228,4 |
| Palmitinsäure | 54,2 | 1 | 256,4 |
| Toluol | 100,0 | | 92,14 |

**Tabelle 18: Produkt (soll)**

| Produkt | **Molmasse** | **Mol** | **Masse (%)** | **Masse (soll)** |
|---|---|---|---|---|
| Propylcarboxysilan | 837,4 | 1 | 88,4% | 176,9 |
| HCl | 36,5 | 3 | 11,6% | 23,1 |

### Synthese

Die drei Fettsäuren wurden mit 100g Toluol in den Reaktionskolben vorgelegt, vermischt und auf ca.60°C erwärmt. Mittels Tropftrichter wurde innerhalb 15 min Propyltrichlorsilan (PTCS) zugetropft. Es war kein Temperaturanstieg zu beobachten. Nach der Zugabe wurde 15min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt, und leichtem Unterdruck wurde HCl neutralisiert. Es wurde 3,5 Stunden nachgerührt.

### Destillation

Das Ölbad eines Rotationsverdampfers wurde auf 85°c erwärmt (Druck auf < 1mbar; Kühlfalle, mit Trockeneis und Isopropanol auf ca. -80°C) und die flüchtigen Bestandteile abgezogen. Es wurde 1h nachgerührt. Das Toluol wurde im Wesentlichen abdestilliert. Erhalten wurde ein weißes, festes Produkt **Auswaage:** Carboxysilan: 174,0g (98,3%)

### NMR Analyse des Carboxysilan

Die ¹H- und ¹³C-NMR-Spektren zeigen das Umsetzungsprodukt aus Propyltrichlorsilan mit den drei Fettsäuren. Zusätzlich liegen ca. 13 % freie Säure vor.
²⁹Si-NMR-Spektrum
ca. 74,6 %Si im Bereich Carboxysilan
ca. 22,3 %Si M-Strukturen (abgeleitet aus den Carboxysilanen)
ca. 0,4 %Si D-Strukturen (abgeleitet aus den Carboxysilanen)
ca. 2,7 %Si Zusatzsignal bei -24 ppm (Silikon)

**Chloridbestimmung:** Von dem hergestellten Carboxysilan wurde außerdem eine Chloridbestimmung durchgeführt.

**Tabelle 19: Chloridbestimmung**

| **Bestimmung** | **Ergebnis** | **Einheit** |
|---|---|---|
| Gesamtchlorid | < 0,1 | % (Masse) |

**Löslichkeitsuntersuchung in Lösungsmittel**

**Tabelle 20: Löslichkeit**

| Löslichkeit | Vinyltrimethoxysilan (VTMO) |
|---|---|
| Carboxysilan | < 1% |

Es wurde ein festes weißes Propylcarboxysilan der drei verschiedenen Fettsäuren hergestellt.

### Beispiel 3: Umsetzung von Tetrachlorsilan (SiCl₄) mit verschiedenen Fettsäuren

### Beispiel 3.1: Tetrachlorsilan mit Capryl-, Caprin-, Laurin-und Myristinsäure

**Tabelle 21: Übersicht**

| | | **R**^{3a-cd} | | **R**^{1a-cd} |
|---|---|---|---|---|
| Caprylsäure | R^{3a} | C₇H₁₅ | R^{1a} | -(CO)C₇H₁₅ |
| Caprinsäure | R^{3b} | C₉H₁₉ | R^{1b} | -(CO)C₉H₁₉ |
| Laurinsäure | R^{3c} | C₁₁H₂₃ | R^{1c} | -(CO)C₁₁H₂₃ |
| Myristinsäure | R^{3d} | C₁₃H₂₇ | R^{1d} | -(CO)C₁₃H₂₇ |

**Durchführung:** Synthese mit vier verschiedenen Fettsäuren (=< C14) und Tetrachlorsilan (SiCl₄), Versuchsansatz: 200g

(Kettenlänge der Fettsäuren R^{1a-cd}: C8, C10 C12, C14)

**Tabelle 22: Edukte**

| **Edukte** | **m (Ist) [g]** | **Stoffmenge [mol]** | **Molmasse [g/mol]** |
|---|---|---|---|
| Tetrachlorsilan/ SiCl₄ | 37,1 | 1 | 169,9 |
| Laurinsäure | 43,8 | 1 | 200,3 |
| Myristinsäure | 49,9 | 1 | 228,4 |
| Caprylsäure (flüssig) | 31,5 | 1 | 144,2 |
| Caprinsäure | 37,7 | 1 | 172,3 |
| Toluol | 100,0 | | 92,14 |

**Tabelle 23: Produkt (soll)**

| **Produkt** | **Molmasse** | **Mol** | **Masse (%)** | **Masse (soll)** |
|---|---|---|---|---|
| **Siliziumcarboxysilan** | 769,3 | 1 | 84,0% | 168,1 |
| **HCl** | 36,5 | 4 | 16,0% | 31,9 |

### Synthese

Die vier Fettsäuren wurden mit 100g Toluol in den Reaktionskolben vorgelegt, vermischt und auf ca.50°C erwärmt. Mittels Tropftrichter wurde innerhalb 15 min Tetrachlorsilan (SiCl₄) zugetropft. Es war kein Temperaturanstieg zu beobachten. Nach der Zugabe wurde 15min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt, mit leichtem Unterdruck wurde HCl neutralisiert. Es wurde 3,5 Stunden nachgerührt.

### Destillation

Das Ölbad des Rotationsverdampfers wurde auf 85°c erwärmt (Druck auf < 1mbar, Kühlfalle, mit Trockeneis und Isopropanol auf ca. -80°C) und flüchtige Bestandteile abgezogen. Anschließend wurde 1h nachgerührt. Toluol konnte im Wesentlichen vollständig abdestilliert werden. Das Produkt ist flüssig, leicht viskos, leicht gelb.
**Auswaage:** Carboxysilan: 164,4g (97,80%)

### NMR Analyse des Carboxysilan

Die ¹H- und ¹³C-NMR-Spektren zeigen das Umsetzungsprodukt aus Tetrachlorsilan mit den vier Fettsäuren. Zusätzlich liegen ca. 15 % freie Säure vor.
²⁹Si-NMR-Spektrum
ca. 60,0 %Si im Bereich Tetracarboxysilan
ca. 35,5 %Si M-Strukturen abgeleitet aus dem Tetracaboxysilan
ca. 4,5 %Si D-Strukturen abgeleitet aus dem Tetracaboxysilan

**Chloridbestimmung:** Von dem hergestellten Carboxysilan wurde außerdem eine Chloridbestimmung durchgeführt.

**Tabelle 24: Chloridbestimmung**

| **Bestimmung** | **Ergebnis** | **Einheit** |
|---|---|---|
| Gesamtschlorid | 400 (< 0,1) | mg/kg (% Masse) |

**Löslichkeitsuntersuchung in Lösungsmittel**

**Tabelle 25: Löslichkeit**

| Löslichkeit | Vinyltrimethoxysilan (VTMO) |
|---|---|
| Carboxysilan | > 50% |

Es wurde ein flüssiges, leicht gelb, leicht viskoses Siliziumcarboxysilan der vier verschiedenen Fettsäuren hergestellt.

### Beispiel 3.2: Tetrachlorsilan mit Myristin-, Palmitin-, Stearin- und Behensäure

**Tabelle 26: Übersicht**

| | | **R**^{3a-cd}**-** | | **R**^{1a-cd}**-** |
|---|---|---|---|---|
| Myristinsäure | R^{3a} | C₁₃H₂₇ | R^{1a} | - (CO) C₁₃H₂₇ |
| Palmitinsäure | R^{3b} | C₁₅H₃₁ | R^{1b} | - (CO) C₁₅H₃₁ |
| Stearinsäure | R^{3c} | C₁₇H₃₅ | R^{1c} | - (CO) C₁₇H₃₅ |
| Behensäure | R^{3d} | C₂₁H₄₃ | R^{1d} | - (CO) C₂₁H₄₃ |

### Durchführung

Synthese mit vier verschiedenen Fettsäuren (>= C14) mit Tetrachlorsilan (SiCl₄),
Versuchsansatz: 200g

Kettenlänge der Fettsäuren R^{1a-cd}-: C14, C16, C18, C22)

**Tabelle 27: Edukte**

| **Edukte** | **m (Ist) [g]** | **Stoffmenge [mol]** | **Molmasse [g/mol]** |
|---|---|---|---|
| Tetrachlorsilan (SiCl₄) | 26,6 | 1 | 169,9 |
| Stearinsäure | 44,5 | 1 | 284,5 |
| Myristinsäure | 35,7 | 1 | 228,4 |
| Palmitinsäure | 40,1 | 1 | 256,4 |
| Behensäure | 53,2 | 1 | 340,6 |
| Toluol | 100,0 | | 92,14 |

**Tabelle 28: Produkt (soll)**

| **Produkt** | **Molmasse** | **Mol** | **Masse (%)** | **Masse (soll)** |
|---|---|---|---|---|
| **Siliziumcarboxysilan** | 1135,0 | 1 | 88,6% | 177,2 |
| **HCl** | 36,5 | 4 | 11,4% | 22,8 |

### Synthese

Die vier Fettsäuren wurden mit 100g Toluol in den Reaktionskolben vorgelegt, vermischt und auf ca.50°C erwärmt. Mittels Tropftrichter wurde innerhalb 15 min Tetrachlorsilan (SiCl₄ zugetropft. Es war kein Temperaturanstieg zu beobachten. Nach der Zugabe wurde 15 min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt, mit leichtem Unterdruck wurde HCl neutralisiert. Es wurde 3,5 Stunden nachgerührt.

### Destillation

Das Ölbad des Rotationsverdampfers wurde auf 85°c erwärmt (Druck auf < 1mbar, Kühlfalle, mit Trockeneis und Isopropanol auf ca. -80°C) und flüchtige Bestandteile abgezogen. Anschließend wurde 1h nachrühren. Toluol konnte im Wesentlichen vollständig entfernt werden. Es wurde ein weißes, festes Produkt erhalten.
**Auswaage:** Carboxysilan: 174,1g (97,80%)
**NMR Analyse des Carboxysilan**
Die ¹H- und ¹³C-NMR-Spektren der Probe zeigen Tetracarboxysilan mit den verschiedenen Fettsäureresten und zusätzlichen Anteilen freier Carbonsäure (ca. 15%).
²⁹Si-NMR-Spektrum
66,3 %Si Tetracarboxysilan
28,3 %Si M-Struktuen abgeleitet aus Tetracarboxysilan
5,4 %Si D-Strukturen abgeleitet aus Teträcarboxysilan

**Chloridbestimmung:** Von dem hergestellten Carboxysilan wurde außerdem eine Chloridbestimmung durchgeführt.

**Tabelle 29: Chloridbestimmung**

| **Bestimmung** | **Ergebnis** | **Einheit** |
|---|---|---|
| Gesamtchlorid | < 0,1 | % (Masse) |

**Löslichkeitsuntersuchung in Lösungsmittel**

**Tabelle 30: Löslichkeit**

| Löslichkeit | Vinyltrimethoxysilan (VTMO) |
|---|---|
| Carboxysilan | < 1% |

Es wurde ein festes, weißes Siliziumcarboxysilan der vier verschiedenen Fettsäuren hergestellt.

### Beispiel 3.3: Tetrachlorsilan mit Capryl-, Palmitin-,Stearin-und Behensäure

**Tabelle 31: Übersicht**

| | | **R**^{3a-cd}**-** | | **R**^{1a-cd}**-** |
|---|---|---|---|---|
| Caprylsäure | R^{3a} | C₇H₁₅ | R^{1a} | -(CO)C₇H₁₅ |
| Palmitinsäure | R^{3b} | C₁₅H₃₁ | R^{1b} | -(CO)C₁₅H₃₁ |
| Stearinsäure | R^{3c} | C₁₇H₃₅ | R^{1c} | -(CO)C₁₇H₃₅ |
| Behensäure | R^{3d} | C₂₁H₄₃ | R^{1d} | -(CO)C₂₁H₄₃ |

### Durchführung

### Synthese mit vier verschiedenen Fettsäuren mit Tetrachlorsilan (SiCl₄),

Versuchsansatz: 200g

(Kettenlänge der Fettsäuren R^{1a-cd}-: C 8, C16, C18, C22)

**Tabelle 32: Edukte**

| **Edukte** | **m (Ist) [g]** | **Stoffmenge [mol]** | **Molmasse [g/mol]** |
|---|---|---|---|
| Tetrachlorsilan SiCl₄ | 28,4 | 1 | 169,9 |
| Stearinsäure | 47,6 | 1 | 284,5 |
| Caprylsäure (flüssig) | 24,1 | 1 | 144,2 |
| Palmitinsäure | 42,9 | 1 | 256,4 |
| Behensäure | 57,0 | 1 | 340,6 |
| Toluol | 100,0 | | 92,14 |

**Tabelle 33: Produkt (soll)**

| **Produkt** | **Molmasse** | **Mol** | **Masse (%)** | **Masse (soll)** |
|---|---|---|---|---|
| **Siliziumcarboxysilan** | 1149,7 | 1 | 87,8% | 175,6 |
| **HCl** | 36,5 | 4 | 12,2% | 24,4 |

### Synthese

Die vier Fettsäuren wurden mit 100g Toluol in den Reaktionskolben vorgelegt, vermischt und auf ca.50°C erwärmt. Mittels Tropftrichter wurde innerhalb 15 min Tetrachlorsilan (SiCl₄) zugetropft. Es war kein Temperaturanstieg zu beobachten. Nach der Zugabe wurde 15min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt, mit leichtem Unterdruck wurde HCl neutralisiert. Es wurde 3,5 Stunden nachgerührt.

### Destillation

Das Ölbad des Rotationsverdampfers wurde auf 85°c erwärmt (Druck auf < 1mbar, Kühlfalle, mit Trockeneis und Isopropanol auf ca. -80°C) und flüchtige Bestandteile abgezogen. Anschließend wurde 1h nachgerührt. Das Toluol konnte im Wesentlichen vollständig entfernt werden. Erhalten wurde ein festes, weißes Produkt.
**Auswaage:** Carboxysilan: 172,2g (98,06%)

### NMR Analyse des Carboxysilan

Die ¹H- und ¹³C-NMR-Spektren der Probe zeigen Tetracarboxysilan der verschiedenen Fettsäuren mit zusätzlichen Anteilen freier Carbonsäure (ca. 20%).
²⁹Si-NMR-Spektrum
60,5 % Si Tetracarboxysilan
28,5 % Si M- Strukturen abgeleitet aus Tetracarboxysilan
11,0 % Si D-Strukturen abgeleitet aus Tetracarboxysilan

**Chloridbestimmung:** Von dem hergestellten Carboxysilan wurde außerdem eine Chloridbestimmung durchgeführt.

**Tabelle 34: Chloridbestimmung**

| **Bestimmung** | **Ergebnis** | **Einheit** |
|---|---|---|
| Gesamtchlorid | < 0,1 | % (Masse) |

**Löslichkeitsuntersuchung in Lösungsmittel**

**Tabelle 35: Löslichkeit**

| Löslichkeit | Vinyltrimethoxysilan (VTMO) |
|---|---|
| Carboxysilan | < 1% |

Es wurde aus SiCl₄ mit drei langkettigen Fettsäuren und einer kurzkettigen Fettsäure ein Carboxysilan synthetisiert. Die kurzkettige Fettsäure hatte jedoch keinen Einfluss auf die Konsistenz des Siliziumcarboxysilanes. Es wurde ein festes, weißes Produkt erhalten.

### Beispiel 4: Umsetzung von 3-Chlorpropyltrichlorsilan (CPTCS) mit verschiedenen Fettsäuren

Das CPTCS wurde über eine Vigreux aufgereinigt.

### Beispiel 4.1: Umsetzung CPTCS mit Capryl-, Caprin-, Laurin-und Myristinsäure

**Tabelle 36: Übersicht**

| | | **R**^{3a-cd}**-** | | **R**^{1a-cd}**-** |
|---|---|---|---|---|
| Caprylsäure | R^{3a} | C₇H₁₅ | R^{3a} | -(CO)C₇H₁₅ |
| Caprinsäure | R^{3b} | C₉H₁₉ | R^{1b} | -(CO)C₉H₁₉ |
| Laurinsäure | R^{3c} | C₁₁H₂₃ | R^{1c} | -(CO)C₁₁H₂₃ |
| Myristinsäure | R^{3d} | C₁₃H₂₇ | R^{1d} | -(CO)C₁₃H₂₇ |

Synthese mit vier verschiedenen Fettsäuren mit 3-Chlorpropyltrichlorsilan (CPTCS)
Versuchsansatz: 200g

(Kettenlänge der Fettsäuren R^{1a-cd}- :C8, C10 C12, C14)

**Tabelle 37: Edukte**

| **Edukte** | **m (Ist) [g]** | **Stoffmenge [mol]** | **Molmasse [g/mol]** |
|---|---|---|---|
| CPTCS | 44,3 | 1 | 212,0 |
| Laurinsäure | 41,9 | 1 | 200,3 |
| Myristinsäure | 47,7 | 1 | 228,4 |
| Caprylsäure (flüssig) | 30,1 | 1 | 144,2 |
| Caprinsäure | 36,0 | 1 | 172,3 |
| Toluol | 100,0 | | 92,14 |

**Tabelle 38: Produkt (soll)**

| **Produkt** | **Molmasse** | **Mol** | **Masse (%)** | **Masse (soll)** |
|---|---|---|---|---|
| **Propylcarboxysilan** | 811,2 | 1 | 84,7% | 169,5 |
| **HCl** | 36,5 | 4 | 12,2% | 30,5 |

### Synthese

Die vier Fettsäuren wurden mit 100g Toluol in den Reaktionskolben vorgelegt, vermischt und auf ca.50°C erwärmt.
Mittels Tropftrichter wurde innerhalb 15 min Chlorpropyltrichlorsilan (CPTCS) zugetropft. Es war kein Temperaturanstieg zu beobachten. Nach der Zugabe wurde 15min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt, mit leichtem Unterdruck wurde HCl neutralisiert. Es wurde 3,5 Stunden nachgerührt.

### Destillation

Das Ölbad des Rotationsverdampfers wurde auf 85°c erwärmt (Druck auf < 1mbar, Kühlfalle, mit Trockeneis und Isopropanol auf ca. -80°C) und flüchtige Bestandteile abgezogen. Anschließend wurde 1h nachgerührt. Toluol konnte im Wesentlichen vollständig entfernt werden. Erhalten wurde ein flüssiges, leicht viskoses und leicht gelbes Produkt. **Auswaage:** Carboxysilan: 173,8g

### NMR Analyse des Carboxysilan

Die ¹H- und ¹³C-NMR-Spektren zeigen das Umsetzungsprodukt aus Chlorpropyltrichlorsilan mit den verschiedenen Fettsäuren. Die Chloratome am Silizium wurden ausgetauscht, während der Chlorpropylrest unverändert vorliegt. Entsprechend liegen Anteile überschüssiger freier Säure vor.
²⁹Si-NMR₋Spektrum
ca. 82,8% Si im Bereich Silan (Chlorpropyltricarboxysilan)
ca. 17,2 % Si M-Strukturen

**Chloridbestimmung:** Von dem hergestellten Carboxysilan wurde außerdem eine Chloridbestimmung durchgeführt.

**Tabelle 39: Chloridbestimmung**

| **Bestimmung** | **Ergebnis** | **Einheit** |
|---|---|---|
| Gesamtchlorid | 4,35 | % (Masse) |

**Löslichkeitsuntersuchung in Lösungsmittel**

**Tabelle 40: Löslichkeit**

| Löslichkeit | Vinyltrimethoxysilan (VTMO) |
|---|---|
| Carboxysilan | > 50% |

Es wurde ein flüssiges, leicht viskoses Propylcarboxysilan der drei verschiedenen Fettsäuren hergestellt.

### Beispiel 4.2: CPTCS mit Myristin-, Palmitin-, Stearin- und Behensäure

**Tabelle 41: Übersicht**

| | | **R**^{3a-cd}**-** | | **R**^{1a-cd}**-** |
|---|---|---|---|---|
| Myristinsäure | R^{3a} | C₁₃H₂₇ | R^{1a} | -(CO)C₁₃H₂₇ |
| Palmitinsäure | R^{3b} | C₁₅H₃₁ | R^{1b} | -(CO)C₁₅H₃₁ |
| Stearinsäure | R^{3c} | C₁₇H₃₅ | R^{1c} | -(CO)C₁₇H₃₅ |
| Behensäure | R^{3d} | C₂₁H₄₃ | R^{1d} | -(CO)C₂₁H₄₃ |

Synthese mit vier verschiedenen Fettsäuren mit 3-Chlorpropyltrichlorsilan (CPTCS),
Versuchsansatz: 200g

(Kettenlänge der Fettsäuren R^{1a-cd}-: C14, C16, C18, C22)

**Tabelle 42: Edukte**

| **Edukte** | **m (Ist) [g]** | **Stoffmenge [mol]** | **Molmasse [g/mol]** |
|---|---|---|---|
| CPTCS | 26,6 | 1 | 212,0 |
| Stearinsäure | 43,0 | 1 | 284,5 |
| Myristinsäure | 34,6 | 1 | 228,4 |
| Palmitinsäure | 38,8 | 1 | 256,4 |
| Behensäure | 51,5 | 1 | 340,6 |
| Toluol | 100,0 | | 92,14 |

**Tabelle 43: Produkt (soll)**

| **Produkt** | **Molmasse** | **Mol** | **Masse (%)** | **Masse (soll)** |
|---|---|---|---|---|
| **Propylcarboxysilan** | 1176,1 | 1 | 89,0% | 177,9 |
| **HCl** | 36,5 | 4 | 11,0% | 22,1 |

### Synthese

Die vier Fettsäuren wurden mit 100g Toluol in den Reaktionskolben vorgelegt, vermischt und auf ca.50°C erwärmt. Mittels Tropftrichter wurde innerhalb 15 min 3-Chlorpropyltrichlorsilan (CPTCS) zugetropft. Es war kein Temperaturanstieg zu beobachten. Nach der Zugabe wurde 15min nachgerührt und danach die Temperatur des Ölbades auf 150°C erhöht. Während des Nachrührens war eine Gasentwicklung (HCl-Gas) zu beobachten. Mittels Waschflasche, mit NaOH + Wasser gefüllt, mit leichtem Unterdruck wurde HCl neutralisiert. Es wurde 3,5 Stunden nachgerührt.

### Destillation

Das Ölbad wurde auf 85°c erwärmt, mittels Rotationsverdampfer (Druck auf < 1mbar, Kühlfalle, mit Trockeneis und Isopropanol auf ca. -80°C) wurden flüchtige Bestandteile abgezogen. Es wurde 1h nachgerührt. Toluol konnte nahezu vollständig entfernt werden. Das erhaltene Produkt ist fest und weiß.
**Auswaage:** Carboxysilan: 181,2g
**NMR Analyse des Carboxysilan (Prüfbericht Nr. A090023426**
Die ¹H- und ¹³C-NMR-Spektren zeigen das Umsetzungsprodukt aus Chlorpropyltrichlorsilan mit Fettsäuren. Die Chloratome am Silizium wurden ausgetauscht, während der Chlorpropylrest unverändert vorliegt. Entsprechend liegen Anteile überschüssiger freier Säure vor.
²⁹Si-NMR-Spektrum
74,5% Si Silan (Carboxysilan)
24,2 % Si M-Strukturen (abgleitet aus Carboxysilan)
1,3 % Si D-Strukturen (abgleitet aus Carboxysilan)

**Chloridbestimmung:** Von dem hergestellten Carboxysilan wurde außerdem eine Chloridbestimmung durchgeführt.

**Tabelle 44: Chloridbestimmung**

| **Bestimmung** | **Ergebnis** | **Einheit** |
|---|---|---|
| Gesamtchlorid | 2,9 | % (Masse) |

### Löslichkeitsuntersuchung in Lösungsmittel

**Tabelle 45: Löslichkeit**

| Löslichkeit | Vinyltrimethoxysilan (VTMO) |
|---|---|
| Carboxysilan | < 1% |

Es wurde ein festes, weißes Propylcarboxysilan der drei verschiedenen Fettsäuren hergestellt.

**Zusammenfassung der Ergebnisse der Beispiele 1 bis 4:**

**Tabelle 46:**

| Ausgangs-Silan | Kettenlänge der Fettsäuren | Aussehen |
|---|---|---|
| VTC | =< C14 | flüssig(leicht viskos) leicht gelb |
| | >= C14 | fest, weiß |
| PTCS | =< C14 | flüssig (leicht viskos) leicht gelb |
| | >= C14 | fest, weiß |
| SiCl4 | =< C14 | flüssig (leicht viskos) leicht gelb |
| | >= C14 | fest, weiß |
| | C8, C16, C18, C22 | fest, weiß |
| CPTCS | =< C14 | flüssig (leicht viskos) leicht gelb |
| | >= C14 | fest, weiß |

Carboxysilane mit drei bis vier verschiedenen Carboxyresten konnten erfolgreich hergestellt werden. Im Roh-Carboxysilan liegen 5 - 20 % freie Fettsäure vor, die aus der Bildung von Dimeren und Trimeren resultieren können. Bei CPTCS konnte das Chlor der Propylgruppe jedoch nicht substituiert werden.

Es wurde SiCl₄ mit 3 langkettigen Fettsäuren und einer kurzkettigen Fettsäure synthetisiert. Die kurzkettige Fettsäure konnte insgesamt keinen Einfluss auf die Konsistenz des Siliziumcarboxysilans ausüben. Es wurde ein weißes, festes Produkt erhalten.

Bei den aus drei oder vier verschiedenen Fettsäuren mit R^{1(1a bis d)} kleiner oder gleich R¹ ≤ C14 (Carboxyresten =< C 14), wie Caprylsäure, Caprinsäure Laurinsäure, Myristinsäure, wurden flüssige Carboxysilane isoliert, die sich gut in Vinyltrimethoxysilan lösen (Carboxysilane: leicht gelb, leicht viskos und lösen sich gut in VTMO > 50%).

Die aus drei oder vier verschiedenen Fettsäuren mit R^{1(1a bis d)} größer oder gleich R¹ ≥ 14 C-Atome hergestellten Carboxysilane (Carboxyreste >= C 14), wie Myristinsäure, Stearinsäure, Palmitinsäure, Behensäure, wurden feste, weiße Produkte erhalten, die sich schlecht in VTMO lösen (in VTMO 1%).

Ohne an eine Theorie gebunden zu sein, wird angenommen, dass wenn drei von vier der Carboxy-Gruppe mehr als 14 C-Atome aufweisen, die hergestellten Carboxysilane fest sind, auch, wenn eine dieser 14 C-Atome oder weniger (unter 13 C-Atome) aufweist.

A**nwendungsbeispiele:** Carboxysilane als Katalysatorvorläuferverbindungen in Sioplas-Verfahren (als Kat-MB)

### Durchführung: Extrusion

### Pfropfen von PE-HD MG9641S von Borealis (M 56/77/08) mit Vinyltrimethoxysilan etwa 90%ig mit Peroxid und Verarbeitungshilfsmittel

Die Pfropfung erfolgte auf dem Extruder ZE 25 von Berstorff. In den Versuchen wurden Stränge hergestellt. Die gepfropften Stränge wurden nach der Extrusion granuliert. Die Granulate wurden direkt nach der Granulierung in PE-AL-PE Tüten abgepackt und eingeschweißt. Vor dem Einschweißen wurden die Granulate mit Stickstoff überlagert.

### Verarbeitungsparameter der Pfropfungsreaktion auf der ZE 25

Temperaturprofil: -/150/160/200/200/210/210/210 °C, Drehzahl: ca. 100 U/min
Zugabe: 1,5 phr Vinyltrimethoxysilan 90%ig (zus. Peroxid, Verarbeitungshilfsmittel)

### Knetungen: Vorbereitung der Masterbatches

Masterbatches mit Katalysator wurden vorbereitet. Die Verarbeitung erfolgte auf dem HAAKE Laborkneter. 49,0g PE wurden mit 1,0g Katalysator geknetet.

### Verarbeitungsparameter

Kneter, Einfüllrichter, Bandwerkzeug, Bandabzug; gefüllte Einzugszone,
Drehzahl: 30 rpm, Temperaturprofil: 200°C/5min

### Herstellung fertige Mischung aus 95% PE-HD Vinyl-Silan gepfropft mit 5% Masterbatch (Kat-MB)

Eine Mischung aus 95% PE-HD Silan gepfropft mit 5% Masterbatch Katalysator (Kat-MB) wurde geknetet. Die Verarbeitung erfolgte auf dem HAAKE Laborkneter. Das Kat-MB beinhaltet jeweils 2% des jeweiligen Wirkstoffes. Die erfindungsgemäßen MBs enthalten eine Vorläuferverbindung bzw. Carboxysilan der Formel I und/oder II. Anschließend wurde bei 200°C zu Platten gepresst und zuletzt im Wasserbad bei 80°C vernetzt.

### Verarbeitungsparameter:

Kneter, Einfüllrichter; Drehzahl: 30 rpm, Temperaturprofil: 140°C/3min; 2 min auf 210°C; 210°C/5min; Vernetzungszeit: 0h, 4h und 22h

### Ergebnisse

**Tabelle 47**

| Katalysator | aus Bsp.: | Gel [%] 0h | Gel [%] 4h bei 80°C Wasserbad | Gel [%] 22h bei 80°C Wasserbad |
|---|---|---|---|---|
| VTC =< C14¹ | 1.1 | 31,6 | 38,8 | 53,3 |
| VTC >= C14² | 1.2 | 32,5 | 45,8 | 57,6 |
| PTCS =< C14¹ | 2.1 | 27,2 | 37,9 | 47,3 |
| PTCS >= C14² | 2.2 | 25,3 | 40,1 | 58,2 |
| SiCl4 =< C14³ | 3.1 | 28,2 | 31,5 | 48,9 |
| SiCl4 >= C14⁴ | 3.2 | 18,4 | 31,3 | 51,0 |
| CPTCS =< C14³ | 4.1 | 24,2 | 40,0 | 49,3 |
| SiCl4 < C14 + > C14⁵ | 3.3 | 35,0 | 41,2 | 56,2 |
| VTC+Palmitinsäure | Vergleichsbsp. | 16,96 | 32,94 | 46,21 |
| VTC+Caprinsäure | Vergleichsbsp. | 22,48 | 35,82 | 45,68 |
| Tegokat 216 (DOTL) | | 44,12 | 61,37 | 65,79 |
| Blindwert | | 12,51 | 16,43 | 33,60 |

| | | | | |
|---|---|---|---|---|
| 1 =< C14 Carboxyreste: Myristinsäure, Laurinsäure, Caprylsäure 2 >= C14 Carboxyreste: Myristinsäure, Stearinsäure, Palmitinsäure 3 =< C14 Carboxyreste: Myristinsäure, Laurinsäure, Caprylsäure, Caprinsäure 4 =< C14 Carboxyreste: Myristinsäure, Stearinsäure, Palmitinsäure, Behensäure 5 SiCl4 < C14 + > C14 Carboxyreste: Caprylsäure, Palmitinsäure, Behensäure | | | | |

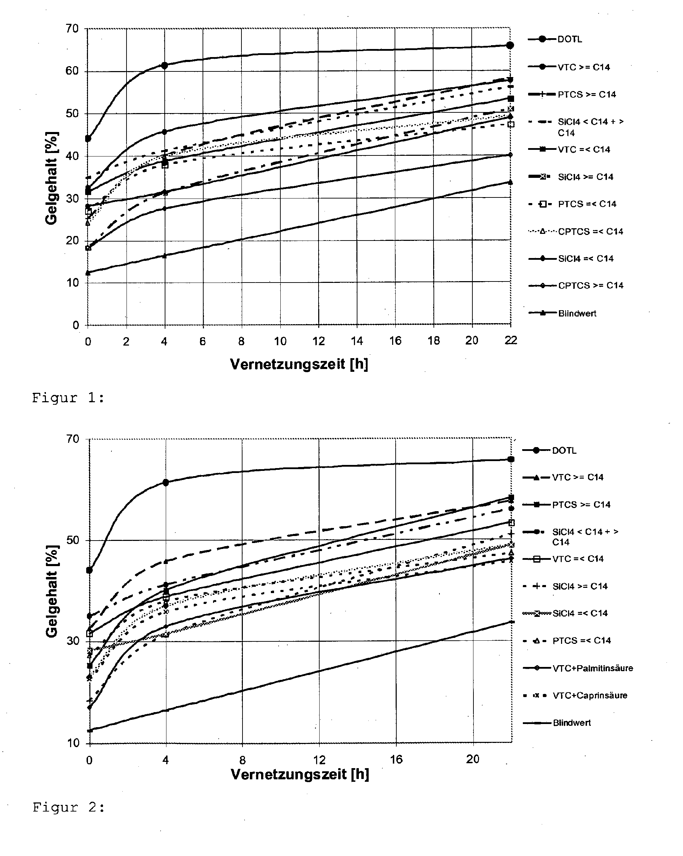

- Figur 1:: Zeigt eine Übersicht der Gelgehalte der verschiedenen Carboxysilane mit drei bis vier verschiedenen Fettsäureresten, [95% PE-HD Vinyl-Silan gepfropft mit 5 % Masterbatch/Vernetzung im Wasserbad bei 80 °C.
- Figur 2:: Zeigt einen Vergleich der erfindungsgemäßen Carboxysilane mit verschiedenen Carboxyresten am Silan mit den Carboxysilanen, die drei oder vier gleiche Carboxy-Reste aufweisen.

Insgesamt ist festzuhalten, das die erfindungsgemäßen Carboxysilane die Vernetzung katalysiert haben. Die festen Carboxysilane, mit Carboxyresten größer 14 C-Atome, vernetzen durchschnittlich besser als die flüssigen Carboxysilane (Carboxyreste kleiner 14 C-Atome) sowie besser als die Fettsäuren und Carboxysilane mit 3 gleichen Carboxyresten.

Die Carboxysilane die mit CPTCS synthetisiert wurden, wurden nicht mit in die Auswertung einbezogen, da bei der Synthese das Chlor am Propyl nicht durch Fettsäure substituiert werden konnte.

Im Vergleich zum DOTL-Ansatz war die Vernetzungsgeschwindigkeit sowie die Vernetzung der Carboxysilane niedriger. Dies ist kann auf die Überdosierung des DOTL zurückgeführt werden.

## Patentansprüche

1. Zusammensetzung umfassend mindestens eine carboxyfunktionalisierte Silicium enthaltende Vorläuferverbindung organischer Säuren
**dadurch gekennzeichnet,**
**dass** sie mindestens eine carboxyfunktionalisierte Silicium enthaltende Vorläuferverbindung zwei verschiedener organischer Säuren umfasst und die carboxyfunktionalisierte Silicium enthaltende Vorläuferverbindung mindestens zwei mit verschiedenen Kohlenwasserstoffresten funktionalisierte Carboxy-Gruppen aufweist und der allgemeinen Formel I und/oder einem oligomeren Siloxan abgeleitet aus der Verbindung der allgemeinen Formel I gemäß der idealisierten allgemeinen Formel II entspricht
(A)_{z}SiR²ₓ(OR¹)_{4-(z+x)} (I)
(R¹O) [(R¹O)_{2-(x+z)} (R₂)ₓSi(A)_{z}O]ₐ [Si(A)_{z}(R²)ₓ(OR¹)_{2-(x+z)}O]_{b}R¹ (II)
- wobei in Formeln I und II unabhängig voneinander z gleich 0, 1 oder 2, x gleich 0, 1 oder 2 sind mit der Maßgabe, dass (z+x) kleiner gleich (≤) 2 ist
- A unabhängig voneinander in Formeln I und II einer unsubstituierten oder substituierten KohlenwasserstoffGruppe entspricht,
- R¹ entspricht unabhängig in Formel I und in Formel II jeweils unabhängig voneinander mindestens zwei verschiedenen Carbonyl-R³ Gruppen, wobei R³ ausgewählt ist aus einem substituierten oder unsubstituierten Kohlenwasserstoffrest mit 3 bis 45 C-Atomen,
- R² ist unabhängig in Formel I und II jeweils unabhängig voneinander eine lineare, verzweigte oder cyclische Alkyl-Gruppe mit 1 bis 24 C-Atomen oder Aryl-Gruppe, - in Formel II a größer gleich (≥) 1 und b größer gleich (≥) 1 sind,
oder sie Mischungen dieser Verbindungen umfasst.

2. Zusammensetzung nach Anspruch 1,
**dadurch gekennzeichnet,**
**dass** jeweils in Formel I und/oder II
- A eine lineare, verzweigte oder cyclische alkyl-, alkenyl-, aryl-, alkylaryl-, arylalkylen-, Cycloalkenylalkylen-, halogenalkyl- und/oder acryloxyalkylfunktionelle Gruppe ist, insbesondere eine lineare, verzweigte und/oder cyclische Alkyl-, Cycloalkenylalkylen-, Arylalkylen-, Halogenalkyl-, Alkenyl-, Alkinyl- und/oder Acryloxyalkyl-Gruppe mit jeweils 1 bis 18 C-Atomen und/oder einer Aryl-Gruppe mit 6, 12 oder 14 C-Atomen, bevorzugt eine Vinyl-, Propyl-, Cyclohexenyl-2-ethylen-, Cyclohexadienyl-2-ethylen- oder 3-Chlorpropyl- Gruppe.

3. Zusammensetzung nach Anspruch 1 oder 2,
**dadurch gekennzeichnet,**
**dass**
(i) jeweils unabhängig voneinander in Formel I und/oder II z gleich 1 und x gleich 0 ist und A einer linearen, verzweigten oder cyclischen Alkyl-, Alkenyl- oder Halogenalkyl-Gruppe mit 1 bis 8 C-Atomen oder einer Cyclohexenyl-ethylen-Gruppe entspricht und R¹ unabhängig voneinander zwei oder drei verschiedenen Carbonyl-R³ Gruppen entspricht, wobei unabhängig R³ ausgewählt ist aus einem unsubstituierten Kohlenwasserstoffrest mit 3 bis 45 C-Atomen, insbesondere mit 7 bis 45 C-Atomen, bevorzugt 7 bis 26 C-Atome oder
(ii) jeweils unabhängig voneinander in Formel I und/oder II z gleich 0 und x gleich 0 ist und R¹ unabhängig voneinander zwei, drei oder vier verschiedenen Carbonyl-R³ Gruppen entspricht, wobei R³ unabhängig ausgewählt ist aus einem unsubstituierten Kohlenwasserstoffrest mit 3 bis 45 C-Atomen, insbesondere mit 7 bis 45 C-Atomen.

4. Zusammensetzung nach einem der Ansprüche 1 bis 3,
**dadurch gekennzeichnet,**
**dass** jeweils unabhängig voneinander in Formel I und/oder II
- R¹ unabhängig voneinander mindestens zwei verschiedenen Carbonyl-R³ Gruppen entspricht, bevorzugt drei oder vier verschiedenen Carbonyl-R³ Gruppen, wobei in den verschiedenen Carbonyl-R³ Gruppen
(a) unabhängig voneinander mindestens ein erster R³-Rest ausgewählt ist aus einem unsubstituierten Kohlenwasserstoffrest mit 3 bis 14 C-Atomen, insbesondere mit 7 bis 14 C-Atomen, bevorzugt 9 bis 13 C-Atome, und
(b) unabhängig voneinander mindestens ein weiterer R³-Rest ausgewählt ist aus einem unsubstituierten Kohlenwasserstoffrest mit 15 bis 45 C-Atomen, insbesondere 15 bis 26 C-Atome, bevorzugt 15 bis 20 C-Atome.

5. Zusammensetzung nach einem der Ansprüche 1 bis 4,
**dadurch gekennzeichnet,**
**dass** sie im Wesentlichen carboxyfunktionalisierte Silicium enthaltende Vorläuferverbindungen der Formel I und/oder II umfasst und im Bereich von etwa 10 °C bis 80 °C flüssig ist, insbesondere zwischen 10 bis 60 °C, bevorzugt zwischen 10 bis 40 °C, besonders bevorzugt zwischen 10 bis 35 °C.

6. Zusammensetzung nach einem der Ansprüche 1 bis 5,
**dadurch gekennzeichnet,**
**dass** die carboxyfunktionalisierte Silicium enthaltende Vorläuferverbindung der Formel I, Formel II oder Mischungen dieser eine Löslichkeit von größer 40 % in einem Kohlenwasserstoff-funktionalisierten Alkoxysilan oder Siloxan aufweisen, insbesondere einem Alkenylfunktionalisierten Alkoxysilan oder Siloxan.

7. Zusammensetzung nach einem der Ansprüche 1 bis 6,
**dadurch gekennzeichnet,**
**dass** sie mindestens eine carboxyfunktionalisierte Silicium enthaltende Vorläuferverbindung der Formel I umfasst (iii) mit z gleich 1 und A gleich H₃C(CH₂)₂-, H₂C=CH₂-, ClCH₂(CH₂)2-, C₆H₉-(CH₂)₂-, 3-C₆H₉-(CH₂)₂-, 2-C₆H₉-(CH₂)₂-, 1-C₆H₉-(CH₂)₂-, C₆H₈-(CH₂)₂-, 1,3-C₆H₈-(CH₂)₂- oder 2,4-C₆H₈-(CH₂)₂- und OR¹ in Formel I mit zwei oder drei verschiedenen R¹ ausgewählt aus -COC₇H₁₅, -COC₉H₁₉, -COC₁₁H₂₃, -COC₁₃H₂₇, -COC₁₅H₃₁, -COC₁₇H₃₅ und -COC₂₁H₄₃, oder (iv) mit z gleich 0 und OR¹ in Formel I mit zwei, drei oder vier verschiedenen R¹ ausgewählt aus -COC₇H₁₅, -COC₉H₁₉, -COC₁₁H₂₃, -COC₁₃H₂₇, -COC₁₅H₃₁, -COC₁₇H₃₅ und -COC₂₁H₄₃,
und gegebenenfalls oligomere Verbindungen gebildet aus der Vorläuferverbindungen der Formel I gemäß der idealisierten Formel II, insbesondere mit a gleich 1 und b gleich 1, oder eine Mischung dieser.

8. Zusammensetzung nach einem der Ansprüche 1 bis 7,
**dadurch gekennzeichnet,**
**dass** die carboxyfunktionalisierte Silicium enthaltende Vorläuferverbindung mindestens zwei mit verschiedenen Kohlenwasserstoffresten funktionalisierte Carboxy-Gruppen aufweist, und erhalten wird aus der Umsetzung eines Halogensilans der allgemeinen Formel III, '
(A)_{z}SiR²ₓ(Hal)_{4-(z+x)} (III)
- mit z gleich 0, 1 oder 2 und x gleich 0, 1 oder 2 mit (x+z) kleiner gleich 2, A wie vorstehend definiert ist, R² wie vorstehend definiert ist, und Hal einem Halogen ausgewählt aus Chlor oder Brom entspricht, mit einem mindestens molaren stöchiometrischen Verhältnis in Bezug auf die Halogen-Gruppen der Formel III mit mindestens zwei verschiedenen organischen Säuren der Formel IV, oder
- bei z gleich 1 und x gleich 0 mit einem mindestens molaren stöchiometrischen Verhältnis in Bezug auf die Halogen-Gruppen der Formel III mit mindestens zwei oder drei verschiedenen organischen Säuren der Formel IV, oder
- bei z gleich 0 und x gleich 0 mit einem mindestens molaren stöchiometrischen Verhältnis in Bezug auf die Halogen-Gruppen der Formel III mit mindestens zwei, drei oder vier verschiedenen organischen Säuren der Formel IV,
wobei in den verschiedenen organischen Säuren der Formel IV
HOR¹ (IV)
- R¹ unabhängig voneinander in Formel IV verschiedenen Carbonyl-R³ Gruppen entspricht, wobei R³ unabhängig ausgewählt ist aus einem substituierten oder unsubstituierten Kohlenwasserstoffrest mit 3 bis 45 C-Atomen, insbesondere mit 7 bis 45 C-Atomen, bevorzugt 7 bis 26 C-Atome,
wobei die Umsetzung gegebenenfalls in Gegenwart eines inerten Lösemittels erfolgt, das nach der Umsetzung im Wesentlichen entfernt wird.

9. Zusammensetzung nach einem der Ansprühe 1 bis 8,
**dadurch gekennzeichnet,**
**dass** sie mindestens eine carboxyfunktionalisierte Silicium enthaltende Vorläuferverbindung der Formel I enthält, die ausgewählt ist aus H₃C(CH₂)₂-Si(OCOC₇H₁₅)ₚ(OCOC₁₁H₂₃)ₚ(OCOC₁₃H₂₇)ₚ, H₃C(CH₂)₂-Si(OCOC₁₃H₂₇)ₚ(OCOC₁₅H₃₁)ₚ(OCOC₁₇H₃₅)ₚ, H₂C=CH₂-Si(OCOC₇H₁₅)ₚ(OCOC₁₁H₂₃)ₚ(OCOC₁₃H₂₇)ₚ, H₂C=CH₂-Si(OCOC₁₃H₂₇)ₚ(OCOC₁₅H₃₁)ₚ(OCOC₁₇H₃₅)ₚ. C₆H₉-(CH₂)₂-Si(OCOC₇H₁₅)ₚ(OCOC₁₁H₂₃)ₚ(OCOC₁₃H₂₇)ₚ. C₆H₉-(CH₂)₂-Si(OCOC₁₃H₂₇)ₚ(OCOC₁₅H₃₁)ₚ(OCOC₁₇H₃₅)ₚ, ClCH₂(CH₂)₂-Si(OCOC₇H₁₅)ₚ(OCOC₁₁H₂₃)ₚ(OCOC₁₃H₂₇)ₚ, ClCH₂(CH₂)₂-Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)₂)Si(OCOC₇H₁₅)ₚ(OCOC₁₁H₂₃)ₚ(OCOC₁₃H₂₇)ₚ, (H₄₃C₂₁OCO) ₚ (ClCH₂ (CH₂) ₂Si (OCOC₁₃H₂₇) ₚ (OC0C₁₅H₃₁) ₚ (OCOC₁₇H₃₅) ₚ, (H₁₉C₉OCO) ₚ (ClCH₂ (CH₂) ₂) Si (OCOC₇H₁₅) ₚ (OCOC₁₁H₂₃) ₚ (OCOC₁₃H₂₇) ₚ, (H₁₉C₉OCO)ₚSi(OCOC₇H₁₅)ₚ(OCOC₁₁H₂₃)ₚ(OCOC₁₃H₂₇)ₚ, (H₄₃C₂₁OCO)ₚSi(OCOC₁₃H₂₇)ₚ(OCOC₁₅H₃₁)ₚ(OCOC₁₇H₃₅)ₚ (H₃₃C₁₆)-Si(OCOC₇H₁₅)ₚ(OCOC₁₁H₂₃)ₚ(OCOC₁₃H₂₇)ₚ (H₃₃C₁₆)-Si(OCOC₁₃H₂₇)ₚ(OCOC₁₅H₃₁)ₚ(OCOC₁₇H₃₅)ₚ, (H₁₇C₈)-Si(OCOC₇H₁₅)ₚ(OCOC₁₁H₂₃)ₚ(OCOC₁₃H₂₇)ₚ (H₁₇C₈)-Si(OCOC₁₃H₂₇)ₚ(OCOC₁₅H₃₁)ₚ(OCOC₁₇H₃₅)ₚ, (H₉C₄)-Si(OC0C₇H₁₅)ₚ(OCOC₁₁H₂₃)ₚ(OCOC₁₃H₂₇)ₚ (H₉C₄)-Si(OCOC₁₃H₂₇)ₚ(OCOC₁₅H₃₁)ₚ(OCOC₁₇H₃₅)ₚ,
mit jeweils p gleich 0, 1, 2 oder 3, mit der Maßgabe, dass mindestens bei zwei verschiedenen Carboxy-Gruppen p gleich 1 ist und die Summe aller p je Silicium enthaltender Vorläuferverbindung gleich 3 ist, wenn in Formel I z = 1 ist und die Summe aller p gleich 4 in tetra-Carboxy funktionalisierten Vorläuferverbindungen der Formel I mit z = 0 ist, sowie gegebenenfalls entsprechende oligomere Verbindungen dieser Vorläuferverbindungen oder eine Mischung dieser.

10. Zusammensetzung nach einem der Ansprühe 1 bis 9,
**dadurch gekennzeichnet,**
**dass** sie auf ein Trägermaterial aufgebracht, in ein Trägermaterial eingelagert und/oder eingekapselt ist.

11. Zusammensetzung nach einem der Ansprühe 1 bis 10, geeignet zur Vernetzung von thermoplastischen Basispolymeren,
**dadurch gekennzeichnet, dass** sie
mindestens eine Silicium enthaltende Vorläuferverbindung mindestens zwei verschiedener organischer Säuren der allgemeinen Formel I und/oder II entsprechend vorstehender Definition als Komponente-A umfasst, und
- gegebenenfalls als Komponente-B einen Radikalbildner und
- gegebenenfalls als Komponente-C eine organofunktionelle Silan-Verbindung,
insbesondere der Formel V,
(B)_{b}SiR⁴_{c}(OR⁵)_{3-d-c} (V)
- wobei unabhängig voneinander d gleich 0, 1, 2 oder 3 und c gleich 0, 1, 2
oder 3 ist, mit der Maßgabe, dass in Formel V c+d kleiner gleich (≤) 3 ist,
- mit B unabhängig voneinander für eine einwertige ungesättigte Kohlenwasserstoff-Gruppe in Formel V, insbesondere (R⁷)₂C=C(R⁷)-Eq-, worin R⁷ gleich oder verschieden sind und R⁷ unabhängig ein Wasserstoffatom, Methyl- oder Phenyl-Gruppe ist, die Gruppe E eine Gruppe aus der Reihe -CH₂-, -(CH₂)₂-, -(CH₂)₃-, - O(O)C(CH₂)₃- oder -C(O)O-(CH₂)₃- darstellt, q gleich 0 oder 1 ist, bevorzugt eine Vinyl-Gruppe,
- R⁵ ist unabhängig voneinander Methyl, Ethyl, n-Propyl und/oder iso-Propyl,
- R⁴ ist unabhängig voneinander eine substituierte oder unsubstituierte Kohlenwasserstoff-Gruppe, insbesondere eine Alkyl-Gruppe mit 1 bis 16 C-Atomen oder eine Aryl-Gruppe.

12. Silicium enthaltende Vorläuferverbindung der allgemeinen Formel I und/oder II entsprechend der Definition nach einem der Ansprüche 1 bis 11.

13. Verfahren zur Herstellung einer Zusammensetzung nach einem der Ansprüche 1 bis 11, umfassend mindestens eine carboxyfunktionalisierte Silicium enthaltende Vorläuferverbindung einer organischen Säure mit mindestens zwei mit verschiedenen Kohlenwasserstoffresten funktionalisierten Carboxy-Gruppen, indem ein Halogensilan der Formel III
(A)_{z}SiR² ₓ (Hal)_{4-(z+x)} (III)
- mit z gleich 0, 1 oder 2, x gleich 0, 1 oder 2 und (z+x) kleiner gleich (≤) 2,
- A unabhängig eine unsubstituierte oder substituierte Kohlenwasserstoff- Gruppe,
- R² unabhängig voneinander eine unsubstituierte lineare oder verzweigte Alkyl-Gruppe mit 1 bis 24 C-Atomen oder Aryl-Gruppe und
- Hal jeweils unabhängig eine Halogen-Gruppe ausgewählt aus Chlor oder Brom sind,
mit mindestens zwei verschiedenen organischen Säuren der Formel IV, umgesetzt wird,
- wobei in den verschiedenen organischen Säuren der Formel IV
HOR¹ (IV)
- R¹ unabhängig voneinander einer Carbonyl-R³ Gruppe entspricht, wobei R³ unabhängig ausgewählt ist aus einem substituierten oder unsubstituierten Kohlenwasserstoffrest mit 3 bis 45 C-Atomen,
und die organischen Säuren gegebenenfalls mindestens im molaren stöchiometrischen Verhältnis zu den Halogen-Gruppen der Formel III vorliegen, gegebenenfalls in Gegenwart eines inerten Lösemittels.

14. Verfahren nach Anspruch 13,
**dadurch gekennzeichnet,**
**dass** die verschiedenen organischen Säuren der Formel IV untereinander im Verhältnis von 10 : 1 bis 1 : 10 eingesetzt werden, bevorzugt werden die verschiedenen Säuren der Formel IV etwa äquimolar eingesetzt,

15. Verfahren nach Anspruch 13 oder 14,
**dadurch gekennzeichnet,**
**dass**, wenn in Formel III
(v) z gleich 1 und x gleich 0 und A einer unsubstituierten oder substituierten Kohlenwasserstoff-Gruppe entsprechen zwei oder drei verschiedene organische Säuren der Formel IV mindestens im molaren stöchiometrischen Verhältnis in Bezug auf die Halogen-Gruppen der Formel III oder, wenn
(vi) z gleich 0 und x gleich 0 sind zwei, drei oder vier verschiedene organische Säuren der Formel IV mindestens im molaren stöchiometrischen Verhältnis in Bezug auf die Halogen-Gruppen der Formel III
umgesetzt werden.

16. Verfahren nach einem der Ansprüche 13 bis 15,
**dadurch gekennzeichnet,**
**dass** eine Verbindung der allgemeinen Formel III
v) mit z gleich 1 und A gleich H₃C(CH₂)₂-, (H₃₃C₁₆) -, insbesondere n-/iso- (H₃₃C₁₆) -, (H₁₇C₈) -, (H₉C₄) -, H₂C=CH₂-, ClCH₂(CH₂)₂-, C₆H₉-(CH₂)₂-, 3-C₆H₉-(CH₂)₂-, 2-C₆H₉-(CH₂)₂-, 1-C₆H₉-(CH₂)₂-, C₆H₈-(CH₂)₂-, 1,3-C₆H₈-(CH₂)₂-, oder 2,4-C₆H₈-(CH₂)₂- und mit mindestens zwei oder drei verschiedenen organischen Säuren der Formel IV umgesetzt wird, wobei R¹ unabhängig ausgewählt ist aus -COC₇H₁₅, -COC₉H₁₉, -COC₁₁H₂₃, -COC₁₃H₂₇, -COC₁₅H₃₁, -COC₁₇H₃₅ und -COC₂₁H₄₃, oder
(vi) mit z gleich 0 mit mindestens zwei, drei oder vier verschiedenen organischen Säuren der Formel IV umgesetzt wird, wobei R¹ unabhängig ausgewählt ist aus -COC₇H₁₅, -COC₉H₁₉, -COC₁₁H₂₃, -OC₁₃H₂₇, -COC₁₅H₃₁, - COC₁₇H₃₅ und -C₂₁H₄₃.

17. Verwendung einer Zusammensetzung oder einer Verbindung der Formel I oder II nach einem der Ansprüche 1 bis 16 als Vorläuferverbindung eines Silanhydrolysekatalysator und/oder als Silanolkondensationskatalysator, bei der Herstellung eines Silicium enthaltenden Polymers, Polymercompounds, eines ungefüllten vernetzten Polymers und/oder eines gefüllten vernetzten Polymers, in einem Monosil-, Sioplas- und/oder Co-Polymerisationsverfahren, zur Herstellung von ungefüllten Si-vernetzten Polymercompounds, zur Herstellung von gefüllten Si-vernetzten Polymercompounds; entsprechend gefüllten Si-vernetzten oder ungefüllten Si-vernetzten Polymeren basierend auf thermoplastischen Basispolymeren; zusammen mit einer organofunktionellen Silan-Verbindung; zusammen mit einer organofunktionellen Silan-Verbindung, vorzugsweise der Formel V, wie vorstehend definiert, zum Pfropfen auf ein Basispolymer, zum Co-Polymerisieren mit einem Monomer und/oder Prepolymer des Basispolymers, gegebenenfalls in Gegenwart eines Radikalbildners; bei der Herstellung von Artikeln, Formkörpern, von Kabeln oder Rohren, zusammen mit anderen Silanolkondensationskatalysatoren.

18. Masterbatch enthaltend eine Zusammensetzung oder eine Verbindung der Formel I oder II nach einem der Ansprüche 1 bis 16, insbesondere zur Vernetzung von thermoplastischen Basispolymeren, **dadurch gekennzeichnet, dass** er mindestens eine Silicium enthaltende Vorläuferverbindung einer organischen Säure der Formel I und/oder der Formel II und ein thermoplastisches Basispolymer, ein silangepfropftes Basispolymer, ein silan-co-polymerisiertes Basispolymer, ein Monomer dieser Basispolymere, ein Prepolymer dieser Basispolymere und/oder Mischungen dieser, und gegebenenfalls einen Radikalbildner umfasst.

## Claims

1. Composition comprising at least one carboxy-functionalized, silicon-containing precursor compound of organic acids,
**characterized**
**in that** it comprises at least one carboxy-functionalized, silicon-containing precursor compound of two different organic acids, and the carboxy-functionalized, silicon-containing precursor compound has at least two carboxyl groups functionalized with different hydrocarbon radicals, and of the general formula I, and/or corresponds to an oligomeric siloxane derived from the compound of the general formula I in accordance with the idealized general formula II
(A)_{z}SiR²ₓ(OR¹)_{4-(z+x)} (I)
(R¹O) [(R¹O)_{2-(x+z)}(R²)ₓSi(A)_{z}O]ₐ[Si(A)_{z}(R*²*)ₓ(OR'_{2-(x+z)}O]_{b}R¹ (II)
- where in formulae I and II independently of one another z is 0, 1 or 2, x is 0, 1 or 2, with the proviso that (z+x) is less than or equal to (≤) 2,
- A independently at each occurrence in formulae I and II corresponds to an unsubstituted or substituted hydrocarbon group,
- R¹ corresponds independently in formula I and in formula II, in each case independently of one another, to at least two different carbonyl-R³ groups, where R³ is selected from a substituted or unsubstituted hydrocarbon radical having 3 to 45 C atoms,
- R² is independently in formulae I and II in each case independently of one another a linear, branched or cyclic alkyl group having 1 to 24 C atoms, or aryl group,
- in formula II, a is greater than or equal to (≥) 1 and b is greater than or equal to (≥) 1,
or it comprises mixtures of these compounds.

2. Composition according to Claim 1,
**characterized**
**in that** in each case in formula I and/or II
- A is a linear, branched or cyclic alkyl-, alkenyl-, aryl-, alkylaryl-, arylalkylene-, cycloalkenyl-alkylene -, haloalkyl- and/or acryloyloxyalkyl-functional group, more particularly a linear, branched and/or cyclic alkyl, cycloalkenyl-alkylene, arylalkylene, haloalkyl, alkenyl, alkynyl and/or acryloyloxyalkyl group having in each case 1 to 18 C atoms and/or an aryl group having 6, 12 or 14 C atoms, preferably a vinyl, propyl, cyclohexenyl-2-ethylene, cyclohexadienyl-2-ethylene or 3-chloropropyl group.

3. Composition according to Claim 1 or 2, **characterized**
**in that**
(i) in each case independently of one another in formula I and/or II z is 1 and x is 0, and A corresponds to a linear, branched or cyclic alkyl, alkenyl or haloalkyl group having 1 to 8 C atoms or to a cyclohexenyl-ethylene group, and R¹ independently at each occurrence corresponds to two or three different carbonyl-R³ groups, where independently R³ is selected from an unsubstituted hydrocarbon radical having 3 to 45 C atoms, more particularly having 7 to 45 C atoms, preferably 7 to 26 C atoms, or
(ii) in each case independently of one another in formula I and/or II, z is 0 and x is 0, and R¹ independently at each occurrence corresponds to two, three or four different carbonyl-R³ groups, where R³ is independently selected from an unsubstituted hydrocarbon radical having 3 to 45 C atoms, more particularly having 7 to 45 C atoms.

4. Composition according to any of Claims 1 to 3, **characterized**
**in that** in each case independently of one another in formula I and/or II
- R¹ independently at each occurrence corresponds to at least two different carbonyl-R³ groups, preferably three or four different carbonyl-R³ groups, where, in the different carbonyl-R³ groups,
(a) independently of one another at least one first R³ radical is selected from an unsubstituted hydrocarbon radical having 3 to 14 C atoms, more particularly having 7 to 14 C atoms, preferably 9 to 13 C atoms, and
(b) independently of one another at least one further R³ radical is selected from an unsubstituted hydrocarbon radical having 15 to 45 C atoms, more particularly 15 to 26 C atoms, preferably 15 to 20 C atoms.

5. Composition according to any of Claims 1 to 4, **characterized**
**in that** it comprises substantially carboxy-functionalized, silicon-containing precursor compounds of the formula I and/or II and is liquid in the range from about 10°C to 80°C, more particularly between 10 to 60°C, preferably between 10 to 40°C, more preferably between 10 to 35°C.

6. Composition according to any of Claims 1 to 5, **characterized**
**in that** the carboxy-functionalized, silicon-containing precursor compound of the formula I, formula II or mixtures of these have a solubility of greater than 40% in a hydrocarbon-functionalized alkoxysilane or siloxane, more particularly an alkenyl-functionalized alkoxysilane or siloxane.

7. Composition according to any of Claims 1 to 6, **characterized**
**in that** it comprises at least one carboxy-functionalized, silicon-containing precursor compound of the formula I
(iii) where z is 1 and A is H₃C(CH₂)₂-, H₂C=CH₂-, ClCH₂ (CH₂) ₂-, C₆H₉-(CH₂)₂-, 3-C₆H₉-(CH₂)₂-, 2-C₆H₉-(CH₂)₂-, 1-C₆H₉-(CH₂)₂-, C₆H₈-(CH₂)₂-, 1,3-C₆H₈-(CH₂)₂-or 2,4-C₆H₈-(CH₂)₂- and OR¹ in formula I with two or three different radicals R¹ selected from -COC₇H₁₅, - COC₉H₁₉, -COC₁₁H₂₃, -COC₁₃H₂₇, -COC₁₅H₃₁, -COC₁₇H₃₅ and -COC₂₁H₄₃, or
(iv) where z is 0 and OR¹ in formula I with two, three or four different radicals R¹ selected from - COC₇H₁₅, -COC₉H₁₉, -COC₁₁H₂₃, -COC₁₃H₂₇, -COC₁₅H₃₁, - COC₁₇H₃₅ and -COC₂₁H₄₃,
and optionally oligomeric compounds formed from the precursor compounds of the formula I in accordance with the idealized formula II, more particularly with a as 1 and b as 1, or a mixture of these.

8. Composition according to any of Claims 1 to 7, **characterized**
**in that** the carboxy-functionalized, silicon-containing precursor compound has at least two carboxyl groups functionalized with different hydrocarbon radicals, and is obtained from the reaction of a halosilane of the general formula III,
(A)_{z}SiR²ₓ(Hal)_{4-(z+x)} (III)
- where z is 0, 1 or 2 and x is 0, 1 or 2, with (x+z) being less than or equal to 2, A is as defined above, R² is as defined above, and Hal corresponds to a halogen selected from chlorine or bromine, with an at least molar stoichiometric ratio in relation to the halogen groups of the formula III, with at least two different organic acids of the formula IV, or
- where z is 1 and x is 0, with an at least molar stoichiometric ratio in relation to the halogen groups of the formula III, with at least two or three different organic acids of the formula IV, or
- where z is 0 and x is 0, with an at least molar stoichiometric ratio in relation to the halogen groups of the formula III, with at least two, three or four different organic acids of the formula IV,
where in the different organic acids of the formula IV
HOR¹ (IV)
- R¹ independently at each occurrence in formula IV corresponds to different carbonyl-R³ groups, where R³ is selected independently from a substituted or unsubstituted hydrocarbon radical having 3 to 45 C atoms, more particularly having 7 to 45 C atoms, preferably 7 to 26 C atoms,
the reaction taking place optionally in the presence of an inert solvent which is substantially removed after the reaction.

9. Composition according to any of Claims 1 to 8, **characterized**
**in that** it comprises at least one carboxy-functionalized, silicon-containing precursor compound of the formula I which is selected from H₃C(CH₂)₂-Si(OCOC₇H₁₅)ₚ(OCOC₁₁H₂₃)ₚ(OCOC₁₃H₂₇)ₚ, H₃C(CH₂)₂-Si(OCOC₁₃H₂₇)ₚ(OCOC₁₅H₃₁)ₚ(OCOC₁₇H₃₅)ₚ, H₂C=CH₂-Si(OCOC₇H₁₅)ₚ(OCOC₁₁H₂₃)ₚ(OCOC₁₃H₂₇)ₚ, H₂C=CH₂-Si(OCOC₁₃H₂₇)ₚ(OCOC₁₅H₃₁)ₚ(OCOC₁₇H₃₅)ₚ, C₆H₉₋(CH₂)₂-Si(OCOC₇H₁₅)ₚ(OCOC₁₁H₂₃)ₚ(OCOC₁₃H₂₇)ₚ, C₆H₉-(CH₂)₂-Si(OCOC₁₃H₂₇)ₚ(OCOC₁₅H₃₁)ₚ(OCOC₁₇H₃₅)ₚ, ClCH₂(CH₂)₂-Si(OCOC₇H₁₅)ₚ(OCOC₁₁H₂₃)ₚ(OCOC₁₃H₂₇)ₚ, ClCH₂(CH₂)₂-Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)₂)Si(OCOC₇H₁₅)ₚ(OCOC₁₁H₂₃)ₚ(OCOC₁₃H₂₇)ₚ, (H₄₃C₂₁OCO)ₚ(ClCH₂(CH₂)₂Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)₂)Si(OCOC₇H₁₅)ₚ(OCOCₙH₂₃)ₚ(OCOC₁₃H₂₇)ₚ, (H₁₉C₉OCO)ₚSi(OCOC₇H₁₅)ₚ(OCOC₁₁H₂₃)ₚ(OCOC₁₃H₂₇)ₚ, (H₄₃C₂₁OCO)pSi(OCOC₁₃H₂₇)ₚ(OCOC₁₅H₃₁)ₚ(OCOC₁₇H₃₅)ₚ, (H₃₃C₁₆)-Si(OCOC₇H₁₅)ₚ(OCOC₁₁H₂₃)ₚ(OCOC₁₃H₂₇)ₚ, (H₃₃C₁₆)-Si(OCOC₁₃H₂₇)ₚ(OCOC₁₅H₃₁)ₚ(OCOC₁₇H₃₅)ₚ, (H₁₇C₈)-Si(OCOC₇H₁₅)ₚ(OCOC₁₁H₂₃)ₚ(OCOC₁₃H₂₇)ₚ, (H₁₇C₈)-Si(OCOC₁₃H₂₇)ₚ(OCOC₁₅H₃₁)ₚ(OCOC₁₇H₃₅)ₚ, (H₉C₄)-Si(OCOC₇H₁₅)ₚ(OCOC₁₁H₂₃)ₚ(OCOC₁₃H₂₇)ₚ, (H₉C₄)-Si(OCOC₁₃H₂₇)ₚ(OCOC₁₅H₃₁)ₚ(OCOC₁₇H₃₅)ₚ,
where in each case p is 0, 1, 2 or 3, with the proviso that p is 1 at least for two different carboxyl groups, and the sum of all of the ps per silicon-containing precursor compound is 3 if z in formula I is 1, and the sum of all of the ps is 4 in tetra-carboxy-functionalized precursor compounds of the formula I with z = 0, and also, optionally, corresponding oligomeric compounds of these precursor compounds, or a mixture of these.

10. Composition according to any of Claims 1 to 9,
**characterized**
**in that** it is applied to a carrier material, encapsulated and/or incorporated into a carrier material.

11. Composition according to any of Claims 1 to 10, suitable for the crosslinking of thermoplastic base polymers,
**characterized in that** it comprises
at least one silicon-containing precursor compound of at least two different organic acids of the general formula I and/or II as defined above, as component A, and
- optionally as component B a radical initiator and
- optionally as component C an organofunctional silane compound, more particularly of the formula V,
(B)_{b}SiR⁴ _{c} (OR⁵)_{3-d-c} (V)
- where independently at each occurrence d is 0, 1, 2 or 3 and c is 0, 1, 2 or 3, with the proviso that in formula V c+d is less than or equal to (≤) 3,
- where B independently at each occurrence is a monovalent unsaturated hydrocarbon group in formula V, more particularly (R⁷)₂C=C (R⁷) -E_{q}-, in which R⁷s are identical or different and R⁷ independently is a hydrogen atom, methyl group or phenyl group, the group E represents a group from the series -CH₂-, -(CH₂)₂-, - (CH₂)₃-, - O(O)C(CH₂)₃- or -C(O)O-(CH₂)₃-, q is 0 or 1, preferably a vinyl group,
- R⁵ independently at each occurrence is methyl, ethyl, n-propyl and/or isopropyl,
- R⁴ independently at each occurrence is a substituted or unsubstituted hydrocarbon group, more particularly an alkyl group having 1 to 16 C atoms, or an aryl group.

12. Silicon-containing precursor compound of the general formula I and/or II corresponding to the definition according to any of Claims 1 to 11.

13. Process for preparing a composition according to any of Claims 1 to 11, comprising at least one carboxy-functionalized, silicon-containing precursor compound of an organic acid having at least two carboxyl groups functionalized with different hydrocarbon radicals, by reacting a halosilane of the formula III
(A)_{z}SiR² ₓ(Hal)_{4-(z+x)} (III)
- where z is 0, 1 or 2, x is 0, 1 or 2, and (z+x) is less than or equal to (≤) 2,
- A independently is an unsubstituted or substituted hydrocarbon group,
- R² independently at each occurrence is an unsubstituted linear or branched alkyl group having 1 to 24 C atoms, or aryl group, and
- Hal in each case independently is a halogen group selected from chlorine or bromine,
with at least two different organic acids of the formula IV,
- where in the different organic acids of the formula IV
HOR¹ (IV)
- R¹ independently at each occurrence corresponds to a carbonyl-R³ group, where R³ is independently selected from a substituted or unsubstituted hydrocarbon radical having 3 to 45 C atoms,
and the organic acids are present optionally at least in a molar stoichiometric ratio to the halogen groups of the formula III, optionally in the presence of an inert solvent.

14. Process according to Claim 13,
**characterized**
**in that** the different organic acids of the formula IV are used in a ratio to one another of 10:1 to 1:10; preferably the different acids of the formula IV are used approximately equimolarly.

15. Process according to Claim 13 or 14,
**characterized**
**in that**, if in formula III
(v) z is 1 and x is 0, and A corresponds to an unsubstituted or substituted hydrocarbon group, two or three different organic acids of the formula IV are reacted at least in a molar stoichiometric ratio in relation to the halogen groups of the formula III, or, if
(vi) z is 0 and x is 0, two, three or four different organic acids of the formula IV are reacted at least in a molar stoichiometric ratio in relation to the halogen groups of the formula III.

16. Process according to any of Claims 13 to 15,
**characterized**
**in that** a compound of the general formula III
v) where z is 1 and A is H₃C (CH₂)₂-, (H₃₃C₁₆) -, more particularly n-/iso- (H₃₃C₁₆) -, (H₁₇C₈)-, (H₉C₄)-, H₂C=CH₂-, ClCH₂(CH₂)₂-, C₆H₉-(CH₂)₂-, 3-C₆H₉- (CH₂)₂*-,* 2-C₆H₉-(CH₂)₂-, 1-C₆H₉-(CH₂)₂-, C₆H₈-(CH₂)₂-, 1,3-C₆H₈-(CH₂)₂-, or 2,4-C₆H₈-(CH₂)₂-,
and
is reacted with at least two or three different organic acids of the formula IV, where R¹ independently is selected from - COC₇H₁₅, -COC₉H₁₉, -COC₁₁H₂₃, -COC₁₃H₂₇, -COC₁₅H₃₁, -COC₁₇H₃₅ and -COC₂₁H₄₃, or
(vi) where z is 0, is reacted with at least two, three or four different organic acids of the formula IV, where R¹ is independently selected from -COC₇H₁₅, -COC₉H₁₉, -COC₁₁H₂₃, -COC₁₃H₂₇, - COC₁₅H₃₁, -COC₁₇H₃₅, and -C₂₁H₄₃.

17. Use of a composition or of a compound of the formula I or II according to any of Claims 1 to 16 as a precursor compound of a silane hydrolysis catalyst and/or as a silanol condensation catalyst, in the preparation of a silicon-containing polymer, polymer compound, an unfilled crosslinked polymer and/or a filled crosslinked polymer, in a Monosil, Sioplas and/or co-polymerization process, for producing unfilled Si-crosslinked polymer compounds, for producing filled Si-crosslinked polymer compounds; correspondingly filled Si-crosslinked or unfilled Si-crosslinked polymers based on thermoplastic base polymers; together with an organofunctional silane compound; together with an organofunctional silane compound, preferably of the formula V, as defined above, for grafting to a base polymer, for co-polymerizing with a monomer and/or prepolymer of the base polymer, optionally in the presence of a radical initiator; in the production of articles, moldings, of cables or pipes, together with other silanol condensation catalysts.

18. Masterbatch comprising a composition or a compound of the formula I or II according to any of Claims 1 to 16, more particularly for the crosslinking of thermoplastic base polymers, **characterized in that** it comprises at least one silicon-containing precursor compound of an organic acid of the formula I and/or of the formula II and a thermoplastic base polymer, a silane-grafted base polymer, a silane-copolymerized base polymer, a monomer of these base polymers, a prepolymer of these base polymers and/or mixtures of these, and optionally a radical initiator.

## Revendications

1. Composition comprenant au moins un composé précurseur contenant du silicium, à fonctionnalisation carboxy, d'acides organiques, **caractérisée en ce qu'**elle comprend au moins un composé précurseur contenant du silicium, à fonctionnalisation carboxy, de deux acides organiques différents et le composé précurseur contenant du silicium, à fonctionnalisation carboxy, comprend au moins deux groupes carboxy fonctionnalisés avec différents radicaux hydrocarbonés et correspond à la formule générale I et/ou à un siloxane oligomère dérivé du composé de formule générale I selon la formule générale II idéalisée
(A)_{z}SiR²ₓ(OR¹)_{4-(z+x)} (I)
(R¹O) [(R¹O)_{2-(x+z)} (R²)ₓSi (A)_{z}O]ₐ [Si (A)_{z} (R²)ₓ (OR¹)_{2-(x+z)}O]_{b}R¹ (II)
- dans les formules I et II, indépendamment les uns des autres, les z représentant 0, 1 ou 2, les x représentant 0, 1 ou 2, à condition que (z+x) soit inférieur ou égal (≤) à 2,
- les A dans les formules I et II correspondant indépendamment les uns des autres à un groupe hydrocarboné non substitué ou substitué,
- les R¹ correspondant indépendamment dans la formule I et dans la formule II chacun indépendamment les uns des autres à au moins deux groupes carbonyl-R³ différents, R³ étant choisi parmi un radical hydrocarboné substitué ou non substitué de 3 à 45 atomes C,
- les R² correspondant indépendamment dans la formule I et II chacun indépendamment les uns des autres à un groupe alkyle linéaire, ramifié ou cyclique de 1 à 24 atomes C ou à un groupe aryle,
- a dans la formule II étant supérieur ou égal (≥) à 1 et b étant supérieur ou égal (≥) à 1,
ou elle comprend des mélanges de ces composés.

2. Composition selon la revendication 1, **caractérisée en ce qu'**à chaque fois, dans la formule I et/ou II,
- A représente un groupe fonctionnel alkyle, alcényle, aryle, alkylaryle, arylalkylène, cycloalcényle, alkylène, halogénoalkyle et/ou acryloxyalkyle linéaire, ramifié ou cyclique, notamment un groupe alkyle, cycloalcényle, alkylène, arylalkylène, halogénoalkyle, alcényle, alcynyle et/ou acryloxyalkyle linéaire, ramifié et/ou cyclique contenant à chaque fois 1 à 18 atomes C et/ou un groupe aryle contenant 6, 12 ou 14 atomes C, de préférence un groupe vinyle, propyle, cyclohexényle, 2-éthylène, cyclohexadiényl-2-éthylène ou 3-chloropropyle.

3. Composition selon la revendication 1 ou 2, **caractérisée en ce que**
(i) à chaque fois indépendamment les uns des autres dans la formule I et/ou II, les z représentent 1 et les x représentent 0 et les A correspondent à un groupe alkyle, alcényle ou halogénoalkyle linéaire, ramifié ou cyclique de 1 à 8 atomes C ou à un groupe cyclohexényl-éthylène, et les R¹ correspondent indépendamment les uns des autres à deux ou trois groupes carbonyl-R³ différents, R³ étant choisi indépendamment parmi un radical hydrocarboné non substitué de 3 à 45 atomes C, notamment de 7 à 45 atomes C, de préférence de 7 à 26 atomes C, ou
(ii) à chaque fois indépendamment les uns des autres dans la formule I et/ou II, les z représentent 0 et les x représentent 0 et les R¹ correspondent indépendamment les uns des autres à deux, trois ou quatre groupes carbonyl-R³ différents, R³ étant choisi indépendamment parmi un radical hydrocarboné non substitué de 3 à 45 atomes C, notamment de 7 à 45 atomes C.

4. Composition selon l'une quelconque des revendications 1 à 3, **caractérisée en ce qu'**à chaque fois indépendamment les uns des autres, dans la formule I et/ou II,
- les R¹ correspondent indépendamment les uns des autres à au moins deux groupes carbonyl-R³ différents, de préférence trois ou quatre groupes carbonyl-R³ différents, dans les différents groupes carbonyl-R³,
(a) indépendamment les uns des autres, au moins un premier radical R³ étant choisi parmi un radical hydrocarboné non substitué de 3 à 14 atomes C, notamment de 7 à 14 atomes C, de préférence de 9 à 13 atomes C, et
(b) indépendamment les uns des autres, au moins un autre radical R³ étant choisi parmi un radical hydrocarboné non substitué de 15 à 45 atomes C, notamment de 15 à 26 atomes C, de préférence de 15 à 20 atomes C.

5. Composition selon l'une quelconque des revendications 1 à 4, **caractérisée en ce qu'**elle comprend principalement des composés précurseurs de formule I et/ou II contenant du silicium, à fonctionnalisation carboxy, et est liquide dans la plage allant d'environ 10 °C à 80 °C, notamment de 10 à 60 °C, de préférence de 10 à 40 °C, de manière particulièrement préférée de 10 à 35 °C.

6. Composition selon l'une quelconque des revendications 1 à 5, **caractérisée en ce que** le composé précurseur contenant du silicium, à fonctionnalisation carboxy, de formule I, de formule II ou leurs mélanges, présente une viscosité supérieure à 40 % dans un alcoxysilane ou siloxane à fonctionnalisation hydrocarbure, notamment un alcoxysilane ou siloxane à fonctionnalisation alcényle.

7. Composition selon l'une quelconque des revendications 1 à 6, **caractérisée en ce qu'**elle comprend au moins un composé précurseur de formule I contenant du silicium, à fonctionnalisation carboxy,
(iii) avec z représentant 1 et A représentant H₃C(CH₂)₂-_{,} H₂C=CH₂-, ClCH₂ (CH₂)₂-, C₆H₉-(CH₂)₂-, 3-C₆H₉-(CH₂)₂-, 2-C₆H₉-(CH₂)₂-, 1-C₆H₉-(CH₂)₂-, C₆H₈-(CH₂)₂-, 1,3-C₆H₈-(CH₂)₂- ou 2,4-C₆H₈-(CH₂)₂- et OR¹ dans la formule I comprenant deux ou trois R¹ différents choisis parmi - COC₇H₁₅, -COC₉H₁₉, -COC₁₁H₂₃, -COC₁₃H₂₇, -COC₁₅H₃₁, -COC₁₇H₃₅ et -COC₂₁H₄₃, ou
(iv) avec z représentant 0 et OR¹ dans la formule I contenant deux, trois ou quatre R¹ différents choisis parmi -COC₇H₁₅, -COC₉H₁₉, -COC₁₁H₂₃, -COC₁₃H₂₇, -COC₁₅H₃₁, - COC₁₇H₃₅ et -COC₂₁H₄₃,
et éventuellement des composés oligomères formés à partir des composés précurseurs de formule I selon la formule II idéalisée, notamment avec a représentant 1 et b représentant 1, ou leur mélange.

8. Composition selon l'une quelconque des revendications 1 à 7, **caractérisée en ce que** le composé précurseur contenant du silicium, à fonctionnalisation carboxy, comprend au moins deux groupes carboxy fonctionnalisés avec des radicaux hydrocarbonés différents, et est obtenu par la mise en réaction d'un halogénosilane de formule générale III
(A)_{z}SiR²ₓ(Hal)_{4-(z+x)} (III)
- avec z représentant 0, 1 ou 2 et x représentant 0, 1 ou 2, avec (x+z) inférieur ou égal à 2, A tel que défini précédemment, R² tel que défini précédemment et Hal correspondant à un halogène choisi parmi le chlore ou le brome, en un rapport molaire au moins stoechiométrique par rapport aux groupes halogène de la formule III, avec au moins deux acides organiques différents de formule IV, ou
- avec z représentant 1 et x représentant 0, en un rapport molaire au moins stoechiométrique par rapport aux groupes halogène de la formule III, avec au moins deux ou trois acides organiques différents de formule IV, ou
- avec z représentant 0 et x représentant 0, en un rapport molaire au moins stoechiométrique par rapport aux groupes halogène de la formule III, avec au moins deux, trois ou quatre acides organiques différents de formule IV
dans les différents acides organiques de formule IV
HOR¹ (IV)
- les R¹ correspondant indépendamment les uns des autres dans la formule IV à différents groupes carbonyl-R³, R³ étant choisi indépendamment parmi un radical hydrocarboné substitué ou non substitué de 3 à 45 atomes C, notamment de 7 à 45 atomes C, de préférence de 7 à 26 atomes C,
la réaction ayant éventuellement lieu en présence d'un solvant inerte, qui est essentiellement éliminé après la réaction.

9. Composition selon l'une quelconque des revendications 1 à 8, **caractérisée en ce qu'**elle contient au moins un composé précurseur contenant du silicium, à fonctionnalisation carboxy, de formule I, qui est choisi parmi H₃C(CH₂)₂-Si(OCOC₇H₁₅)ₚ(OCOC₁₁H₂₃)ₚ(OCOC₁₃Hₙ)_{p,} H₃C(CH₂)₂-Si (OCOC₁₃H₂₇)ₚ(OCOC₁₅H₃₁)ₚ(OCOC₁₇H₃₅)ₚ, H₂C=CH₂-Si(OCOC₇H₁₅)ₚ(OCOC₁₁H₂₃)ₚ(OCOC₁₃H₂₇)ₚ, H₂C=CH₂-Si(OCOC₁₃H₂₇)ₚ(OCOC₁₅H₃₁)ₚ(OCOC₁₇H₃₅)ₚ, C₆H₉-(CH₂)₂-Si(OCOC₇H₁₅)ₚ(OCOC₁₁H₂₃)ₚ(OCOC₁₃H₂₇)ₚ, C₆H₉-(CH₂)₂-Si(OCOC₁₃H₂₇)ₚ(OCOC₁₅H₃₁)ₚ(OCOC₁₇H₃₅)ₚ, ClCH₂(CH₂)₂-Si(OCOC₇H₁₅)ₚ(OCOC₁₁H₂₃)ₚ(OCOC₁₃H₂₇)ₚ, ClCH₂(CH₂)₂-Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)₂)Si(OCOC₇H₁₅)ₚ(OCOC₁₁H₂₃)ₚ(OCOC₁₃H₂₇)ₚ, (H₄₃C₂₁OCO)ₚ(ClCH₂(CH₂)₂Si(OCOC₁₃H₂₇)ₚ(OCOC₁₅H₃₁)ₚ(OCOC₁₇H₃₅)ₚ, (H₁₉C₉OCO)ₚ(ClCH₂(CH₂)₂)Si(OCOC₇H₁₅)ₚ(OCOC₁₁H₂₃)ₚ(OCOC₁₃H₂₇)ₚ, (H₁₉C_{9O}CO)ₚSi(OCOC₇H₁₅)ₚ(OCOC₁₁H₂₃)ₚ(OCOC₁₃H₂₇)ₚ, (H₄₃C₂₁OCO)ₚSi(OCOC₁₃H₂₇)ₚ(OCOC₁₅H₃₁)ₚ(OCOC₁₇H₃₅)ₚ, (H₃₃C₁₆)- Si(OCOC₇H₁₅)ₚ(OCOC₁₁H₂₃)ₚ(OCOC₁₃H₂₇)ₚ, (H₃₃C₁₆)- Si(OCOC₁₃H₂₇)p(OCOC₁₅H₃₁)ₚ(OCOC₁₇H₃₅)ₚ, (H₁₇C₈)- Si(OCOC₇H₁₅)ₚ(OCOC₁₁H₂₃)ₚ(OCOC₁₃H₂₇)ₚ, (H₁₇C₈)- Si(OCOC₁₃H₂₇)ₚ(OCOC₁₅H₃₁)ₚ(OCOC₁₇H₃₅)ₚ, (H₉C₄)- Si(OCOC₇H₁₅)ₚ(OCOC₁₁H₂₃)ₚ(OCOC₁₃H₂₇)ₚ, (H₉C₄)- Si(OCOC₁₃H₂₇)ₚ(OCOC₁₅H₃₁)ₚ(OCOC₁₇H₃₅)ₚ,
avec à chaque fois p représentant 0, 1, 2 ou 3, à condition que p représente 1 pour au moins deux groupes carboxy différents et que la somme de tous les p par composé précurseur contenant du silicium soit égale à 3 lorsque z = 1 dans la formule I, et que la somme de tous les p soit égale à 4 dans les composés précurseurs à fonctionnalisation tétra-carboxy de formule I avec z = 0, ainsi qu'éventuellement des composés oligomères correspondants de ces composés précurseurs ou leur mélange.

10. Composition selon l'une quelconque des revendications 1 à 9, **caractérisée en ce qu'**elle est appliquée sur un matériau support, incorporée et/ou encapsulée dans un matériau support.

11. Composition selon l'une quelconque des revendications 1 à 10, appropriée pour la réticulation de polymères de base thermoplastiques, **caractérisée en ce qu'**elle comprend au moins un composé précurseur contenant du silicium d'au moins deux acides organiques différents de formule générale I et/ou II correspondant à la définition précédente en tant que composant A, et
- éventuellement en tant que composant B un formateur de radicaux et
- éventuellement en tant que composant C un composé de silane organofonctionnel, notamment de formule V
(B)_{b}SiR⁴_{c}(OR⁵)_{3-d-c} (V)
- dans laquelle, indépendamment les uns des autres, d représente 0, 1, 2 ou 3 et c représente 0, 1, 2 ou 3, à condition que, dans la formule V, c+d soit inférieur ou égal (≤) à 3,
- les B représentant indépendamment les uns des autres un groupe hydrocarboné insaturé monovalent dans la formule V, notamment (R⁷)₂C=C(R⁷)-E_{q}-, les R⁷ étant identiques ou différents et les R⁷ représentant indépendamment un atome d'hydrogène, un groupe méthyle ou phényle, le groupe E représentant un groupe de la série -CH₂-, - (CH₂)₂-, - (CH₂)₃-, -O(O)C(CH₂)₃- ou -C(O)O-(CH₂)₃-, q représentant 0 ou 1, de préférence un groupe vinyle,
- les R⁵ représentant indépendamment les uns des autres méthyle, éthyle, n-propyle et/ou iso-propyle,
- les R⁴ représentant indépendamment les uns des autres un groupe hydrocarboné substitué ou non substitué, notamment un groupe alkyle de 1 à 16 atomes C ou un groupe aryle.

12. Composé précurseur contenant du silicium de formule générale I et/ou II correspondant à la définition selon l'une quelconque des revendications 1 à 11.

13. Procédé de fabrication d'une composition selon l'une quelconque des revendications 1 à 11, comprenant au moins un composé précurseur contenant du silicium, à fonctionnalisation carboxy, d'un acide organique contenant au moins deux groupes carboxy fonctionnalisés avec des radicaux hydrocarbonés différents, selon lequel un halogénosilane de formule III
(A)_{z}SiR²ₓ (Hal)_{4-(z+x)} (III)
- dans laquelle z représente 0, 1 ou 2, x représente 0, 1 ou 2 et (z+x) est inférieur ou égal (≤) à 2,
- les A représentent indépendamment un groupe hydrocarboné non substitué ou substitué,
- les R² représentent indépendamment les uns des autres un groupe alkyle linéaire ou ramifié non substitué contenant 1 à 24 atomes C ou un groupe aryle, et
- les Hal représentent chacun indépendamment un groupe halogène choisi parmi le chlore ou le brome, est mis en réaction avec au moins deux acides organiques différents de formule IV
- dans les différents acides organiques de formule IV
HOR¹ (IV)
- les R¹ correspondant indépendamment les uns des autres à un groupe carbonyl-R³, R³ étant choisi indépendamment parmi un radical hydrocarboné substitué ou non substitué de 3 à 45 atomes C,
et les acides organiques étant éventuellement présents en un rapport molaire au moins stoechiométrique par rapport aux groupes halogène de la formule III, éventuellement en présence d'un solvant inerte.

14. Procédé selon la revendication 13, **caractérisé en ce que** les différents acides organiques de formule IV sont utilisés les uns par rapport aux autres en un rapport de 10:1 à 1:10, les différents acides organiques de formule IV étant de préférence utilisés en un rapport approximativement équimolaire.

15. Procédé selon la revendication 13 ou 14, **caractérisé en ce que**, lorsque dans la formule III
(v) z représente 1 et x représente 0, et les A correspondent à un groupe hydrocarboné non substitué ou substitué, deux ou trois acides organiques différents de formule IV sont mis en réaction en un rapport molaire au moins stoechiométrique par rapport aux groupes halogène de la formule III, ou
lorsque
(vi) z représente 0 et x représente 0, deux, trois ou quatre acides organiques différents de formule IV sont mis en réaction en un rapport molaire au moins stoechiométrique par rapport aux groupes halogène de la formule III.

16. Procédé selon l'une quelconque des revendications 13 à 15, **caractérisé en ce qu'**un composé de formule générale III
v) avec z représentant 1 et A représentant H₃C(CH₂)₂-, (H₃₃C₁₆) -, notamment n-/iso- (_{H33}C₁₆) -, (H₁₇C₈) -, (H₉C₄) -, H₂C=CH₂-, ClCH₂ (CH₂) ₂-, C₆H₉-(CH₂)₂-, 3-C₆H₉-(CH₂)₂-, 2-C₆H₉-(CH₂)₂-, 1-C₆H₉- (CH₂)₂-, C₆H₈- (CH₂)₂-, 1,3-C₆H₈- (CH₂)₂- ou 2,4-C₆H₈-(CH₂)₂-, et
est mis en réaction avec au moins deux ou trois acides organiques différents de formule IV,
R¹ étant choisi indépendamment parmi -COC₇H₁₅, -COC₉H₁₉, - COC₁₁H₂₃, -COC₁₃H₂₇, -COC₁₅H₃₁, -COC₁₇H₃₅ et -COC₂₁H₄₃, ou
(vi) avec z représentant 0, est mis en réaction avec au moins deux, trois ou quatre acides organiques différents de formule IV, R¹ étant choisi indépendamment parmi -COC₇H₁₅, -COC₉H₁₉, -COC₁₁H₂₃, -COC₁₃H₂₇, -COC₁₅H₃₁, - COC₁₇H₃₅ et -C₂₁H₄₃.

17. Utilisation d'une composition ou d'un composé de formule I ou II selon l'une quelconque des revendications 1 à 16 en tant que composé précurseur d'un catalyseur d'hydrolyse de silane et/ou en tant que catalyseur de condensation de silane, lors de la fabrication d'un polymère contenant du silicium, d'une composition polymère, d'un polymère réticulé non chargé et/ou d'un polymère réticulé chargé, par un procédé de polymérisation Monosil, Sioplas et/ou de copolymérisation, pour la fabrication de compositions polymères non chargées à réticulation Si, pour la fabrication de compositions polymères chargées à réticulation Si ; correspondant à des polymères chargés à réticulation Si ou non chargés à réticulation Si à base de polymères de base thermoplastiques ; conjointement avec un composé de silane organofonctionnel ; conjointement avec un composé de silane organofonctionnel, de préférence de formule V, tel que défini précédemment, pour le greffage sur un polymère de base, pour la copolymérisation avec un monomère et/ou un prépolymère du polymère de base, éventuellement en présence d'un formateur de radicaux ; lors de la fabrication d'articles, de corps moulés, de câbles ou de tubes, conjointement avec d'autres catalyseurs de condensation de silanol.

18. Mélange maître contenant une composition ou un composé de formule I ou II selon l'une quelconque des revendications 1 à 16, notamment pour la réticulation de polymères de base thermoplastiques, **caractérisé en ce qu'**il comprend au moins un composé précurseur contenant du silicium d'un acide organique de formule I et/ou de formule II, et un polymère de base thermoplastique, un polymère de base greffé avec un silane, un polymère de base copolymérisé avec un silane, un monomère de ces polymères de base, un prépolymère de ces polymères de base et/ou leurs mélanges, et éventuellement un formateur de radicaux.
